(19) Europäisches Patentamt
European Patent Office
Office européen des brevets

(11) EP 0 946 618 B1

(12) EUROPÄISCHE PATENTSCHRIFT

(45) Veröffentlichungstag und Bekanntmachung des Hinweises auf die Patenterteilung:
**09.04.2003 Patentblatt 2003/15**

(21) Anmeldenummer: **97954814.6**

(22) Anmeldetag: **16.12.1997**

(51) Int Cl.[7]: **C08F 232/08**, C08F 210/00, C08F 4/64

(86) Internationale Anmeldenummer:
**PCT/EP97/07050**

(87) Internationale Veröffentlichungsnummer:
**WO 98/027126 (25.06.1998 Gazette 1998/25)**

(54) **CYCLOOLEFINCOPOLYMERE, IHRE VERWENDUNG UND DARAUS HERGESTELLTE FORMKÖRPER**

CYCLOOLEFIN POLYMERS, THEIR USE AND MOULDING PREPARED THEREFROM

CYCLOOLEFINES, LEUR UTILISATION ET CORPS MOULE

(84) Benannte Vertragsstaaten:
**BE DE ES FR GB IT NL**

(30) Priorität: **17.12.1996 DE 19652340**

(43) Veröffentlichungstag der Anmeldung:
**06.10.1999 Patentblatt 1999/40**

(73) Patentinhaber: **Ticona GmbH**
**65451 Kelsterbach (DE)**

(72) Erfinder:
- **JACOBS, Alexandra**
  **D-65931 Frankfurt (DE)**
- **FINK, Gerhard**
  **D-45470 Mülheim an der Ruhr (DE)**
- **RUCHATZ, Dieter**
  **D-63594 Hasselroth (DE)**

(56) Entgegenhaltungen:
**EP-A- 0 504 418**
**EP-A- 0 610 851**
**EP-A- 0 729 977**
**WO-A-94/17113**

- **MIYAKE S ET AL: "HIGHLY ISOSPECIFIC POLYMERIZATION OF PROPYLENE WITH UNSYMMETRICAL METALLOCENE CATALYSTS" MACROMOLECULES, Bd. 28, Nr. 9, 24.April 1995, Seiten 3074-3079, XP000500416**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 946 618 B1

## Beschreibung

Die Erfindung betrifft Cycloolefincopolymere mit hohen Molmassen, ihre Verwendung und daraus hergestellte Formkörper.

Aus der Literatur ist bekannt, daß mit Metallocen-Aluminoxan-Katalysatorsystemen Cycloolefinhomopolymere und -copolymere hergestellt werden können (EP-A-283 164, EP-A-407 870). Die Polymerisation der Cycloolefine verläuft dabei unter Erhalt der Cyclen und kann in Lösungsmitteln oder in Masse durchgeführt werden. Als Lösungsmittel können Kohlenwasserstoffe eingesetzt werden.

In EP 610 851 ist die Herstellung von Cycloolefinpolymeren mit geeigenten Metallocenkatalysatoren beschrieben. EP 544 308 beschreibt Metallocenkatalysatoren, die für die Polymerisation von $\alpha$-Olefinen geeignet sind.

Cycloolefincopolymere können mit einem hohen Gehalt an Cycloolefin hergestellt werden und besitzen dann eine hohe Glastemperatur. Damit verbunden ist eine hohe thermische Formbeständigkeit, weswegen diese Polymere sich zur Verwendung als thermoplastische Formmassen eignen. Cycloolefincopolymere mit einem niedrigeren Gehalt an Cycloolefin weisen eine geringere Glastemperatur auf. Sie besitzen bei Gebrauchstemperatur eine höhere Duktilität und können elastomere Eigenschaften aufweisen.

Bei Cycloolefincopolymeren, die mittels Metallocentechnologie hergestellt werden, zeigt sich, daß sie relativ niedrige Massenmittel der Molmasse aufweisen. Außerdem entstehen bei der Verwendung von Ethylen als Comonomer häufig teilkristalline Ethylenpolymerisate als Nebenprodukte, welche die Transparenz der Cycloolefincopolymere deutlich beeinträchtigen können.

Die Aufgabe der vorliegenden Erfindung besteht in der Bereitstellung von Cycloolefincopolymeren mit höherem Massenmittel des Molekulargewichtes bei gleichzeitig hoher Transparenz und hervorragenden mechanischen Eigenschaften.

Die Aufgabe der vorliegenden Erfindung wird durch ein bestimmtes Cycloolefincopolymer gelöst, das durch Polymerisation von 0,1 bis 99,9 Gew.-%, bezogen auf die Gesamtmenge der Monomeren, mindestens eines polycyclischen Olefins, 0 bis 99,9 Gew.-%, bezogen auf die Gesamtmenge der Monomeren, mindestens eines monocyclischen Olefins und 0,1 bis 99,9 Gew.-%, bezogen auf die Gesamtmenge der Monomeren, mindestens eines acyclischen 1-Olefins, in Gegenwart eines Katalysatorssystems hergestellt wird.

Die Polymerisation wird im flüssigen Cycloolefin selbst oder in Cycloolefin-Lösung durchgeführt, wobei zweckmäßigerweise der Druck oberhalb 1 bar liegt.

Das für das Verfahren zu verwendende Katalysatorsystem enthält mindestens ein Metallocen der Formel I

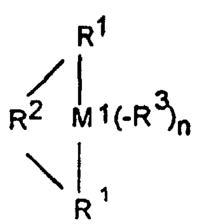

(I)

wobei

- $M^1$ ein Metall der Gruppe 3 bis 10 oder der Lanthaniden-Reihe des Periodensystems der Elemente ist,
- $R^1$ gleich oder verschieden sind und eine Cyclopentadienylguppe, die substituiert sein kann, oder eine Indenylgruppe, die substituiert und teilweise hydriert sein kann, bedeuten,
- $R^2$ eine ein- oder mehrgliedrige Brücke ist, welche die Reste $R^1$ verknüpft und mindestens ein Bor-Atom oder mindestens ein Atom der Gruppe 14 des Periodensystems der Elemente enthält und gegebenenfalls ein oder mehrere Schwefel- oder Sauerstoffatome enthalten kann und gegebenenfalls mit $R^1$ ein kondensiertes Ringsystem bilden kann,
- $R^3$ ein anionischer oder nichtionischer Ligand sind, wobei n = 0, 1, 2, 3 oder 4 in Abhängigkeit von der Valenz von M.

Das für das Verfahren zu verwendende Katalysatorsystem kann außerdem einen oder mehrere Cokatalysatoren enthalten.

Das für das Verfahren zu verwendende Katalysatorsystem ist ein hochaktiver Katalysator für die Olefinpolymerisation. Bevorzugt werden ein Metallocen und ein Cokatalysator eingesetzt. Es können auch Mischungen von zwei oder mehr Metallocenen verwendet werden, insbesondere zur Herstellung von Reaktorblends oder von Polyolefinen mit breiter oder multimodaler Molmassenverteilung.

Bevorzugt handelt es sich bei dem für das Verfahren zu verwendenden Metallocen um eine Verbindung der

Formel 1, wobei

- $M^1$ ein Metall der Gruppe 4 oder der Lanthaniden-Reihe des Periodensystems der Elemente ist,
- $R^1$ gleich oder verschieden sind und eine Cyclopentadienylgruppe, die substituiert sein kann durch ein oder mehrere Halogenatome, ein oder mehrere $C_1$-$C_{40}$-kohlenstoffhaltige Gruppen wie $C_1$-$C_{10}$-Alkylgruppen, die halogeniert sein können, ein oder mehrere $C_6$-$C_{20}$-Arylgruppen, die halogeniert sein können, ein oder mehrere $C_6$-$C_{20}$-Aryloxy-, ein oder mehrere $C_2$-$C_{12}$-Alkenyl-, ein oder mehrere $C_7$-$C_{40}$-Arylalkyl-, ein oder mehrere $C_7$-$C_{40}$-Alkylaryl-, ein oder mehrere $C_8$-$C_{40}$-Arylalkenylgruppen, $SiR^4_3$-, $NR^4_2$-, $Si(OR^4)_3$-,$Si(SR^4)_3$- oder $PR^4_2$-, worin $R^4$ gleich oder verschieden ein Halogenatom, eine $C_1$-$C_{10}$-Alkylgruppe oder eine $C_6$-$C_{10}$-Arylgruppe sind oder ein Ringsystem bilden, oder eine Indenylgruppe, die substituiert sein kann durch ein oder mehrere Halogenatome, ein oder mehrere $C_1$-$C_{40}$kohlenstoffhaltige Gruppen wie $C_1$-$C_{10}$-Alkylgruppen, die halogeniert sein können, ein oder mehrere $C_6$-$C_{20}$-Arylgruppen, die halogeniert sein können, ein oder mehrere $C_6$-$C_{20}$-Aryloxy-, ein oder mehrere $C_2$-$C_{12}$-Alkenyl-, ein oder mehrere $C_7$-$C_{40}$-Arylalkyl-, ein oder mehrere $C_7$-$C_{40}$-Alkylaryl-, ein oder mehrere $C_8$-$C_{40}$-Arylalkenylgruppen, $SiR^4_3$-, $NR^4_2$-, $Si(OR^4)_3$-,$Si(SR^4)_3$- oder $PR^4_2$-, worin $R^4$ gleich oder verschieden ein Halogenatom, eine $C_1$-$C_{10}$-Alkylgruppe oder eine $C_6$-$C_{10}$-Arylgruppe sind oder ein Ringsystem bilden, wobei die Indenylgruppe außerdem teilweise hydriert sein kann, bedeuten, wobei eine der Strukturen $R^1$ einen Substituenten tragen muß,
- $R^2$ eine ein- oder mehrgliedrige Brücke ist, welche die Gruppen $R^1$ verknüpft, und bedeutet vorzugsweise

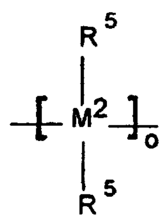 , 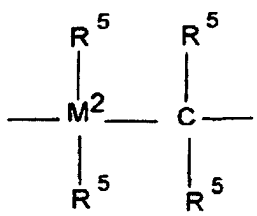 , 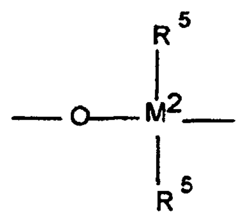 ,

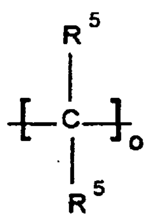 , 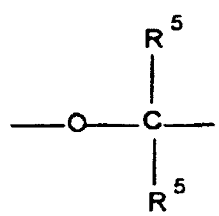 ,

= $BR^5$, = $AlR^5$, -Ge-, -Sn-, -O-, -S-, =SO, = $SO_2$, = $NR^5$, = CO, = $PR^5$, oder =$P(O)R^5$, wobei $R^5$ gleich oder verschieden sind und ein Wasserstoffatom, ein Halogenatom, eine $C_1$-$C_{40}$-kohlenstoffhaltige Gruppe wie eine $C_1$-$C_{10}$-Alkylgruppe, die halogeniert sein kann, eine $C_6$-$C_{20}$-Arylgruppe, die halogeniert sein kann, eine $C_6$-$C_{20}$-Aryloxy-, eine $C_2$-$C_{12}$-Alkenyl-, eine $C_7$-$C_{40}$-Arylalkyl-, eine $C_7$-$C_{40}$-Alkylaryl-, eine $C_8$-$C_{40}$-Arylalkenylgruppe, $SiR^6_3$-, $NR^6_2$-, $Si(OR^6)_3$-, $Si(SR^6)_3$- oder $PR^6_3$- bedeuten, worin $R^6$ gleich oder verschieden ein Halogenatom, eine $C_1$-$C_{10}$-Alkylgruppe oder eine $C_6$-$C_{10}$-Arylgruppe sind oder ein Ringsystem bilden, und

- $M^2$ Silicium, Germanium oder Zinn ist,
- $R^3$ gleich oder verschieden sind und ein Wasserstoffatom, eine $C_1$-$C_{40}$kohlenstoffhaltige Gruppe wie eine $C_1$-$C_{10}$-Alkyl-, eine $C_1$-$C_{10}$-Alkoxy-, eine $C_6$-$C_{10}$-Aryl-, eine $C_6$-$C_{25}$-Aryloxy-, eine $C_2$-$C_{10}$-Alkenyl-, eine $C_7$-$C_{40}$-Arylalkyl- oder eine $C_7$-$C_{40}$-Arylalkenylgruppe, eine OH-Gruppe, ein Halogenatom oder $NR^7_2$, worin $R^7$ ein Halogenatom, eine $C_1$-$C_{10}$-Alkylgruppe oder eine $C_6$-$C_{10}$-Arylgruppe sind, bedeuten, oder $R^3$ zusammen mit den die verbindenden Atomen ein Ringsystem bilden, wobei n = 1 oder 2 ist.

Besonders bevorzugt handelt es sich bei dem für das Verfahren zu verwendenden Metallocen um eine Verbindung der Formel II

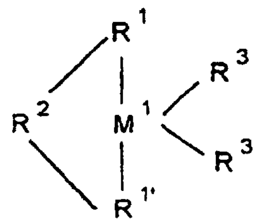

(II)

wobei

- $M^1$ Titan, Zirkonium oder Hafnium bedeutet,
- $R^1$ eine Indenylgruppe oder eine 4,5,6,7-Tetrahydroindenylgruppe bedeutet, die an Position 2 und 3 ausschließlich durch Wasserstoffatome substituiert ist, an den Positionen 4, 5, 6 und 7 anstelle von Wasserstoff weitere Substituenten wie ein oder mehrere Halogenatome, ein oder mehrere $C_1$-$C_{10}$-kohlenstofffhaltige Gruppen tragen kann,
- $R^{1'}$ eine Cyclopentadienylgruppe ist, die an Position 3 substituiert ist durch eine $C_2$-$C_{40}$-kohlenstoffhaltige Gruppe, wie eine $C_2$-$C_{10}$-Alkylgruppe, die halogeniert sein kann, eine $C_6$-$C_{20}$-Arylgruppe, die halogeniert sein kann, eine $C_6$-$C_{20}$-Aryloxygruppe, eine $C_2$-$C_{12}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe, $SiR^4_3$, $NR^4_2$, $SiR(OR^4)_3$, $Si(SR^4)_3$ oder $PR^4_2$, worin $R^4$ gleich oder verschieden ein Halogenatom, eine $C_1$-$C_{10}$-Alkylgruppe oder eine $C_6$-$C_{10}$-Arylgruppe sind oder ein Ringsystem bilden, und die an den weiteren Positionen 2, 4 und 5 anstelle von Wasserstoff weitere Substituenten tragen kann, wie ein oder mehrere $C_1$-$C_{10}$-kohlenstoffhaltige Gruppen oder ein oder mehrere Halogenatome,
- $R^2$ eine ein-, zwei- oder dreigliedrige Brücke ist, welche $R^1$ und $R^{1'}$ jeweils über die Position 1 verknüpft, und bedeutet vorzugsweise

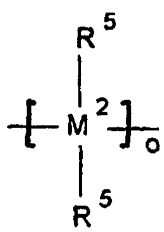 , 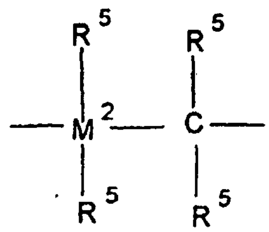 , 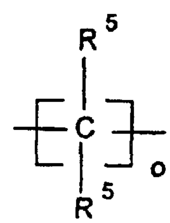 ,

wobei $R^5$ gleich oder verschieden sind und ein Wasserstoffatom, eine $C_1$-$C_{40}$-kohlenstoffhaltige Gruppe wie eine $C_1$-$C_{10}$-Alkylgruppe, die halogeniert sein kann, eine $C_6$-$C_{20}$-Arylgruppe, die halogeniert sein kann, eine $C_6$-$C_{20}$-Aryloxy-, eine $C_2$-$C_{12}$-Alkenyl-, eine $C_7$-$C_{40}$-Arylalkyl-, eine $C_7$-$C_{40}$-Alkylaryl-, eine $C_8$-$C_{40}$-Arylalkenylgruppe bedeutet, wobei O = 1, 2 oder 3 ist,

- $M^2$ Silicium ist,
- $R^3$ gleich oder verschieden sind und ein Wasserstoffatom, eine $C_1$-$C_{40}$kohlenstoffhaltige Gruppe wie eine $C_1$-$C_{10}$-Alkyl-, eine $C_1$-$C_{10}$-Alkoxy-, eine $C_6$-$C_{10}$-Aryl-, eine $C_6$-$C_{25}$,-Aryloxy-, eine $C_2$-$C_{10}$-Alkenyl-, eine $C_7$-$C_{40}$-Arylalkyl- oder eine $C_7$-$C_{40}$-Arylalkenylgruppe, eine OH-Gruppe, ein Halogenatom oder $NR^7_2$, worin $R^7$ ein Halogenatom, eine $C_1$-$C_{10}$-Alkylgruppe oder eine $C_6$-$C_{10}$-Arylgruppe ist, bedeuten oder $R^3$ zusammen mit den sie verbindenden Atomen ein Ringsystem bilden, wobei n = 2 ist.

Ganz besonders bevorzugt handelt es sich bei dem für das Verfahren zu verwendenden Metallocen um eine Verbindung der Formel II, wobei

- $M^1$ Zirkonium ist,
- $R^1$ ein Indenylgruppe ist, die keine Substituenten anstelle der Wasserstoffatome trägt,
- $R^{1'}$ eine Cyclopentadienylgruppe ist, die an Position 3 substituiert ist durch eine $C_2$-$C_{10}$-Alkylgruppe, wie Ethyl, Propyl, iso-Propyl, tert.-Butyl, n-Butyl, durch eine $C_6$-$C_{20}$-Arylgruppe, eine $C_7$-$C_{20}$-Arylkalylgruppe, eine $C_7$-$C_{40}$-Alkylarylgruppe, $SiR^4_3$, $NR^4_2$, $Si(OR^4)_3$, $Si(SR^4)_3$ oder $PR^4_2$, worin $R^4$ gleich oder verschieden ein Halogenatom, eine $C_1$-$C_{40}$-Alkylgruppe oder ein $C_6$-$C_{10}$-Arylgruppen sind oder ein Ringsystem bilden, und die an den weiteren

Positionen 2, 4 und 5 keine Substituenten anstelle der Wasserstoffatome trägt,

$R^2$ eine ein-, zwei- oder dreigliedrige Brücke ist, welche $R^1$ und $R^{1'}$ jeweils über die Position 1 verknüpft, und bedeutet vorzugsweise

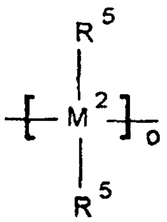 , 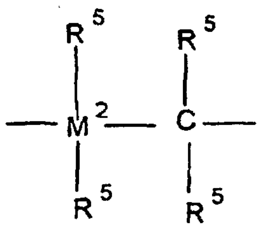 , 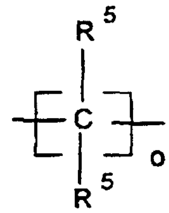 ,

wobei $R^5$ gleich oder verschieden sind und ein Wasserstoffatom, eine $C_1$-$C_{40}$-kohlenstoffhaltige Gruppe wie eine $C_1$-$C_{10}$-Alkylgruppe, die halogeniert sein kann, eine $C_6$-$C_{20}$-Arylgruppe, die halogeniert sein kann, eine $C_6$-$C_{20}$-Aryloxy-, eine $C_2$-$C_{12}$-Alkenyl-, eine $C_7$-$C_{40}$-Arylalkyl-, eine $C_7$-$C_{40}$-Alkylaryl-, eine $C_8$-$C_{40}$-Arylalkenylgruppe bedeutet, wobei o = 1, 2 oder 3 ist,

$M^2$ Silicium ist,

$R^3$ gleich oder verschieden sind und ein Wasserstoffatom, eine $C_1$-$C_{40}$kohlenstoffhaltige Gruppe wie eine $C_1$-$C_{10}$-Alkyl-, eine $C_1$-$C_{10}$-Alkoxy-, eine $C_6$-$C_{10}$-Aryl-, eine $C_6$-C25,-Aryloxy-, eine $C_2$-$C_{10}$-Alkenyl-, eine $C_7$-$C_{40}$-Arylalkyl- oder eine $C_7$-$C_{40}$-Arylalkenylgruppe, eine OH-Gruppe, ein Halogenatom oder $NR^7_2$, worin $R^7$ ein Halogenatom, eine $C_1$-$C_{10}$-Alkylgruppe oder eine $C_6$-$C_{10}$-Arylgruppe ist, bedeuten oder $R^3$ zusammen mit den sie verbindenden Atomen ein Ringsystem bilden, wobei n = 2 ist.

Beispiele für die zu verwendenden Metallocene sind:

Isopropylen(1-indenyl)(3-methylcyclopentadienyl)zirkondichlorid Diphenylmethylen(1-indenyl)(3-methylcyclopentadienyl)zirkondichlorid Methylphenylmethylen(1-indenyl)(3-methylcyclopentadienyl)zirkondichlorid Isopropylen(1-indenyl)(3-ethylcyclopentadienyl)zirkondichlorid Diphenylmethylen(1-indenyl)(3-ethylcyclopentadienyl)zirkondichlorid Methylphenylmethylen(1-indenyl)(3-ethylcyclopentadienyl)zirkondichlorid Isopropylen(1-indenyl)(3-isopropylcyclopentadienyl)zirkondichlorid Diphenylmethylen(1-indenyl)(3-isopropylcyclopentadienyl)zirkondichlorid Methylphenylmethylen(1-indenyl)(3-isopropylcyclopentadienyl)zirkondichlorid Isopropylen(1-indenyl)(3-t-butylcyclopentadienyl)zirkondichlorid Diphenylmethylen(1-indenyl)(3-t-butylcyclopentadienyl)zirkondichlorid Methylphenylmethylen(1-indenyl)(3-t-butylcyclopentadienyl)zirkondichlorid Isopropylen(1-indenyl)(3-trimethylsilylcyclopentadienyl)zirkondichlorid Diphenylmethylen(1-indenyl)(3-trimethylsilylcyclopentadienyl)zirkondichlorid Methylphenylmethylen(1-indenyl)(3-trimethylsilylcyclopentadienyl)zirkondichlorid Isopropylen(4,5,6,7-tetrahydro-1-indenyl)(3-trimethylsilylcyclopentadienyl)zirkondichlorid Isopropylen(1-indenyl)(3,4-dimethylcyclopentadienyl)zirkondichlorid Diphenylmethylen(4,5,6,7-tetrahydro-1-indenyl)(3-trimethylsilylcyclopentadienyl)zirkondichlorid Methylphenylmethylen(4,5,6,7-tetrahydro-1-indenyl)(3-trimethylsilylcyclopentadienyl)zirkondichlorid Isopropylen(1-indenyl)(3,4-di-trimethylsilylcyclopentadienyl)zirkondichlorid Diphenylmethylen(1-indenyl)(3,4-di-trimethylsilylcyclopentadienyl)zirkondichlorid Methylphenylmethylen(1-indenyl)(3,4-ditrimethylsilylcyclopentadienyl)zirkondichlorid Isopropylen(1-indenyl)(2,3-di-trimethylsilylcyclopentadienyl)zirkondichlorid Diphenylmethylen(1-indenyl)(2,3-di-trimethylsilylcyclopentadienyl)zirkondichlorid Methylphenylmethylen(1-indenyl)(2,3-ditrimethylsilylcyclopentadienyl)zirkondichlorid Isopropylen(1-indenyl)(3,4dimethyl(cyclopentadienyl)zirkondichlorid Diphenylmethylen(1-indenyl)(3,4-dimethylcyclopentadienyl)zirkondichlorid Methylphenylmethylen(1-indenyl)(3,4-dimethylcyclopentadienyl)zirkondichlorid Isopropylen(1-indenyl)(3,4-diethylcyclopentadienyl)zirkondichlorid Diphenylmethylen(1-indenyl)(3,4-diethylcyclopentadienyl)zirkondichlorid Methylphenylmethylen(1-indenyl)(3,4-diethylcyclopentadienyl)zirkondichlorid Isopropylen(1-indenyl)(3,4-diisopropylcyclopentadienyl)zirkondichlorid Diphenylmethylen(1-indenyl)(3,4-diisopropylcyclopentadienyl)zirkondichlorid Methylphenylmethylen(1-indenyl)(3,4-diisopropylcyclopentadienyl)zirkondichlorid Isopropylen(1-indenyl)(3,4-di-t-butylcycopentadienyl)zirkondichlorid Diphenylmethylen(1-indenyl)(3,4-di-t-butylcyclopentadienyl)zirkondichlorid Methylphenylmethylen(1-indenyl)(3,4-di-t-butylcyclopentadienyl)zirkondichlorid Isopropylen(1-indenyl)(2,3-dimethylcyclopentadienyl)zirkondichlorid Diphenylmethylen(1-indenyl)(2,3-dimethylcyclopentadienyl)zirkondlchlorid Methylphenylmethylen(1-indenyl)(2,3-dimethylcyclopentadienyl)zirkondichlorid Isopropylen(1-indenyl)(2,3-diethylcyclopentadienyl)zirkondichlorid Diphenylmethylen (1-indenyl)(2,3-diethylcyclopentadienyl)zirkondichlorid Methylphenylmethylen(1-indenyl)(2,3-diethylcyclopentadienyl) zirkondichlorid Isopropylen(1-indenyl)(2,3-diisopropylcyclopentadienyl)zirkondichlorid Diphenylmethylen(1-indenyl) (2,3-diisopropylcyclopentadienyl)zirkondichlorid Methylphenylmethylen(1-indenyl)(2,3-diisopropylcyclopentadienyl)

zirkondichlorid Isopropylen(1-indenyl)(2,3-di-t-butylcycopentadienyl)zirkondichlorid Diphenylmethylen(1-indenyl)(2,3-di-t-butylcyclopentadienyl)zirkondichlorid Methylphenylmethylen(1-indenyl)(2,3-di-t-butylcyclopentadienyl)zirkondichlorid Isopropylen(1-indenyl)(tetramethylcyclopentadienyl)zirkondichlorid Diphenylmethylen(1-indenyl)(tetramethylcyclopentadienyl)zirkondichlorid Methylphenylmethylen(1-indenyl)(tetramethylcyclopentadienyl)zirkondichlorid Isopropylen(4,5,6,7-tetrahydro-1-indenyl)(3-methylcyclopentadienyl)zirkondichlorid Diphenylmethylen(4,5,6,7-tetrahydro-1-indenyl)(3-methylcyclopentadienyl)zirkondichlorid Methylphenylmethylen(4,5,6,7-tetrahydro-1-indenyl)(3-methylcyclopentadienyl)zirkondichlorid, Isopropylen(4,5,6,7-tetrahydro-1-indenyl)(3-ethylcyclopentadienyl)zirkondichlorid Diphenylmethylen(4,5,6,7-tetrahydro-1-indenyl)(3-ethylcyclopentadienyl)zirkondichlorid Methylphenylmethylen(4,5,6,7-tetrahydro-1-indenyl)(3-ethylcyclopentadienyl)zirkondichlorid Isopropylen(4,5,6,7-tetrahydro-1-indenyl)(3-isopropylcyclopentadienyl)zirkondichlorid Diphenylmethylen(4,5,6,7-tetrahydro-1-indenyl)(3-isopropylcyclopentadienyl)zirkondichlorid Methylphenylmethylen(4,5,6,7-tetrahydro-1-indenyl)(3-isopropylcyclopentadienyl)zirkondichlorid Isopropylen(4,5,6,7-tetrahydro-1-indenyl)(3-t-butylcyclopentadienyl)zirkondichlorid Diphenylmethylen(4,5,6,7-tetrahydro-1-indenyl)(3-t-butylcyclopentadienyl)zirkondichlorid Methylphenylmethylen(4,5,6,7-tetrahydro-l-indenyl)(3-t-butylcyclopentadienyl)zirkondichlorid Isopropylen(4,5,6,7-tetrahydro-1-indenyl)(3,4-dimethylcyclopentadienyl)zirkondichlorid Diphenylmethylen(4,5,6,7-tetrahydro-1-indenyl)(3,4dimethylcyclopentadienyl)zirkondichlorid Methylphenylmethylen(4,5,6,7-tetrahydro-1-indenyl)(3,4-dimethylcyclopentadienyl)zirkondichlorid Isopropylen(4,5,6,7-tetrahydro-1-indenyl)(3,4-diethylcyclopentadienyl)zirkondichlorid Diphenylmethylen(4,5,6,7-tetrahydro-1-indenyl)(3,4-diethylcyclopentadienyl)zirkondichlorid Methylphenylmethylen(4,5,6,7-tetrahydro-1-indenyl)(3,4-diethylcyclopentadienyl)zirkondichlorid Isopropylen(4,5,6,7-tetrahydro-1-indenyl)(3,4-diisopropylcyclopentadienyl)zirkondichlorid Diphenylmethylen(4,5,6,7-tetrahydro-1-indenyl)(3,4-diisopropylcyclopentadienyl)zirkondichlorid Methylphenylmethylen(4,5,6,7-tetrahydro-1-indenyl)(3,4-diisopropylcyclopentadienyl)zirkondichlorid isopropylen(4,5,6,7-tetrahydro-1-indenyl)(3,4-ditbutylcycopentadienyl)zirkondichlorid Diphenylmethylen(4,5,6,7-tetrahydro-1-indenyl)(3,4-di-t-butylcyclopentadienyl)zirkondichlorid Methylphenylmethylen(4,5,6,7-tetrahydro-1-indenyl)(3,4-di-t-butylcyclopentadienyl)zirkondichlorid Isopropylen(4,5,6,7-tetrahydro-1-indenyl)(2,3-dimethylcyclopentadienyl)zirkondichlorid Diphenylmethylen(4,5,6,7-tetrahydro-1-indenyl)(2,3-Ldimethylcyclopentadienyl)zirkondichlorid Methylphenylmethylen(4,5,6,7-tetrahydro-1-indenyl)(2,3-dimethylcyclopentadienyl)zirkondichlorid Isopropylen(4,5,6,7-tetrahydro-1-indenyl)(2,3-dimethylcyclopentadienyl)zirkondichlorid Diphenylmethylen(4,5,6,7-tetrahydro-1-indenyl)(2,3-diethylcyclopentadienyl)zirkondichlorid Methylphenylmethylen(4,5,6,7-tetrahydro-1-indenyl)(2,3-diethylcyclopentadienyl)zirkondichlorid Isopropylen(4,5,6,7-tetrahydro-1-indenyl)(2,3-diisopropylcyclopentadienyl)zirkondichlorid Diphenylmethylen(4,5,6,7-tetrahydro-1-indenyl)(2,3-diisopropylcyclopentadienyl)zirkondichlorid Methylphenylmethylen(4,5,6,7-tetrahydro-1-indenyl)(2,3-diisopropylcyclopentadienyl)zirkondichlorid Isopropylen(4,5,6,7-tetrahydro-1-indenyl)(2,3-di-tbutylcycopentadienyl)zirkondichlorid Diphenylmethylen(4,5,6,7-tetrahydro-1-indenyl)(2,3-di-tbutylcyclopentadienyl)zirkondichlorid Methylphenylmethylen(4,5,6,7-tetrahydro-l-indenyi)(2,3-di-tbutylcyclopentadienyl)zirkondichlorid Isopropylen(4,5,6,7-tetrahydro-1-indenyl)(tetramethylcyclopentadienyl)zirkondichlorid Diphenylmethylen(4,5,6,7-tetrahydro-1-indenyl)(tetramethylcyclopentadienyl)zirkondichlorid Methylphenylmethylen(4,5,6,7-tetrahydro-1-indenyl)(tetramethylcyclopentadienyl)zirkondichlorid

Besonders bevorzugt sind:

Isopropylen(1-indenyl)(3-isopropylcyclopentadienyl)zirkondichlorid Diphenylmethylen(1-indenyl)(3-isopropylcyclopentadienyl)zirkondichlorid Methylphenylmethylen(1-indenyl)(3-isopropylcyclopentadienyl)zirkondichlorid Isopropylen(1-indenyl)(3-t-butylcyclopentadienyl)zirkondichlorid Diphenylmethylen(1-indenyl)(3-t-butylcyclopentadienyl)zirkondichlorid Methylphenylmethylen(1-indenyl)(3-t-butylcyclopentadienyl)zirkondichlorid Isopropylen(4,5,6,7-tetrahydro-1-indenyl)(3-isopropylcyclopentadienyl)zirkondichlorid Diphenylmethylen(4,5,6,7-tetrahydro-l-indenyl)(3-isopropylcyclopentadienyl)zirkondichlorid Methylphenylmethylen(4,5,6,7-tetrahydro-1-indenyl)(3-isopropylcyclopentadienyl)zirkondichlorid Isopropylen(1-indenyl)(3-trimethylsilylcyclopentadienyl)zirkondichlorid Diphenylmethylen(1-indenyl)(3-trimethylsilylcyclopentadienyl)zirkondichlorid Methylphenylmethylen(1-indenyl)(3-trimethylsilylcyclopentadienyl)zirkondichlorid Isopropylen(4,5,6,7-tetrahydro-1-indenyl)(3-t-butylcydopentadienyl)zirkondichlorid Diphenylmethylen(4,5,6,7-tetrahydro-1-indenyl)(3-t-butylcyclopentadienyl)zirkondichlorid Methylphenylmethylen(4,5,6,7-tetrahydro-1-indenyl)(3-t-butylcyclopentadienyl)zirkondichlorid Isopropylen(4,5,6,7-tetrahydro-1-indenyl)(3-trimethylsilylcyclopentadienyl)zirkondichlorid Diphenylmethylen(4,5,6,7-tetrahydro-1-indenyl)(3-trimethylsilylcyclopentadienyl)zirkondichlorid Methylphenylmethylen(4,5,6,7-tetrahydro-1-indenyl)(3-trimethylsilylcyclopentadienyl)zirkondichlorid

In dem Verfahren wird als Cokatalysator bevorzugt ein Aluminoxan eingesetzt, welches vorzugsweise die Formel IIIa für den linearen Typ und/oder die Formel IIIb für den cyclischen Typ aufweist,

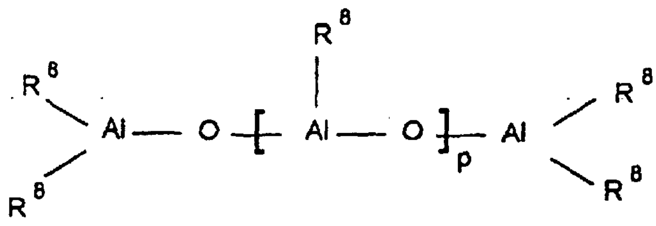

IIIa

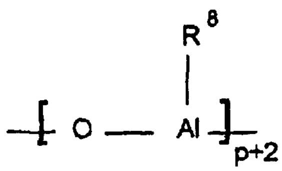

IIIb

wobei in den Formeln IIIa und IIIb die Reste $R^8$ gleich oder verschieden sind und eine $C_1$-$C_6$-Alkylgruppe, eine $C_6$-$C_{18}$-Arylgruppe, Benzyl oder Wasserstoff bedeuten, und n eine ganze Zahl von 2 bis 50, bevorzugt 10 bis 35 bedeutet. Bevorzugt sind die Reste $R^8$ gleich und bedeuten Methyl, Isobutyl, Phenyl oder Benzyl, besonders bevorzugt Methyl.

Sind die Reste $R^8$ verschieden, so sind sie bevorzugt Methyl und Wasserstoff oder alternativ Methyl und Isobutyl, wobei Wasserstoff oder Isobutyl bevorzugt mit einen zahlenmäßigen Anteil von 0,01 bis 40% (der Reste $R^8$) enthalten sind.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden, beispielsweise als Kristallwasser) in einem inerten Lösungsmittel (wie Toluol) umgesetzt wird. Zur Herstellung eines Aluminoxans mit verschiedenen Alkylgruppen $R^8$ werden entsprechend der gewünschten Zusammensetzung zwei verschiedene Aluminiumtrialkyle ($AlR_3$ + $AlR'_3$) mit Wasser umgesetzt (S. Pasynkiewicz, Polyhedron 9 (1990) 429, EP-A-302 424). Die genaue räumliche Struktur der Aluminoxane ist nicht bekannt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist auch möglich, das Aluminoxan auf einen Träger aufzubringen und es dann als Suspension in geträgerter Form einzusetzen. Es sind mehrere Trägerungsverfahren bekannt (EP-A-578 838). Kieselgel kann als Träger fungieren.

Es ist möglich, das für das Verfahren zu verwendende Metallocen vor dem Einsatz in der Polymerisationsreaktion mit einem Cokatalysator, insbesondere einem Aluminoxan vorzuaktivieren. Dadurch wird die Polymerisationsaktivität deutlich erhöht.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von $10^{-4}$ bis 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78 bis 100 °C, vorzugsweise 0 bis 70 °C.

Mit Hilfe des Metallocens kann eine Vorpolymerisation erfolgen. Zur Vorpolymerisation wird bevorzugt das (oder eines der) in der Polymerisation eingesetzte(n) Olefin(e) verwendet.

Das Metallocen kann auch auf einen Träger aufgebracht werden. Geeignete Träger sind beispielsweise Silikagele, Aluminiumoxide, festes Aluminoxan oder andere anorganische Trägermaterialien. Ein geeignetes Trägermaterial ist auch ein Polyolefinpulver in feinverteilter Form.

Eine weitere mögliche Ausgestaltung des erfindungsgemäßen Verfahrens besteht darin, daß man an Stelle oder neben eines Aluminoxans eine salzartige Verbindung der Formel $R_XNH_{4-x}BR'_4$ oder der Formel $R_3PHBR'_4$ als Cokatalysator verwendet. Dabei sind x = 1, 2 oder 3, R = Alkyl oder Aryl, gleich oder verschieden, und R' = Aryl, das auch fluoriert oder teilfluoriert sein kann. In diesem Fall besteht der Katalysator aus dem Reaktionsprodukt eines Metallocens mit einer der genannten Verbindungen (EP-A-277 004).

Falls dem Reaktionsgemisch Lösemittel zugesetzt wird, dann handelt es sich um gebräuchliche inerte Lösemittel wie aliphatische oder cycloaliphatische Kohlenwasserstoffe, Benzin- bzw. hydrierte Dieselölfraktionen oder Toluol.

Die Metallocene werden bevorzugt in Form ihrer Racemate eingesetzt. Das Metallocen wird bevorzugt in einer Konzentration, bezogen auf das Übergangsmetall, von $10^{-1}$ bis $10^{-8}$ mol, vorzugsweise $10^{-2}$ bis $10^{-7}$ mol, besonders bevorzugt von $10^{-3}$ bis $10^{-7}$ mol Übergangsmetall pro $dm^3$ Reaktorvolumen angewendet. Das Aluminoxan wird in einer Konzentration von $10^{-4}$ bis $10^{-1}$, vorzugsweise $10^{-4}$ bis $2*10^{-2}$ mol pro $dm^3$ Reaktorvolumen verwendet, bezogen auf den Gehalt an Aluminium. Prinzipiell sind aber auch höhere Konzentrationen möglich.

Die Erfindung betrifft Cycloolefincopolymere, die hergestellt werden durch Polymerisation von 0,1 bis 99,9 Gew.-%, bezogen auf die Gesamtmenge der Monomeren, mindestens eines polycyclischen Olefins der Formel IV, V, V', VI, VII, VIII oder IX

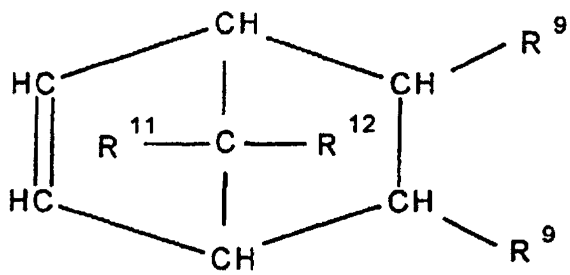

(IV)

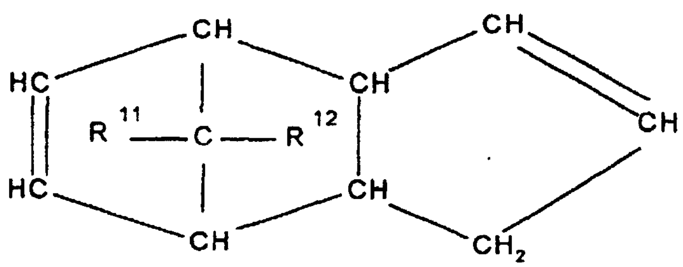

(V)

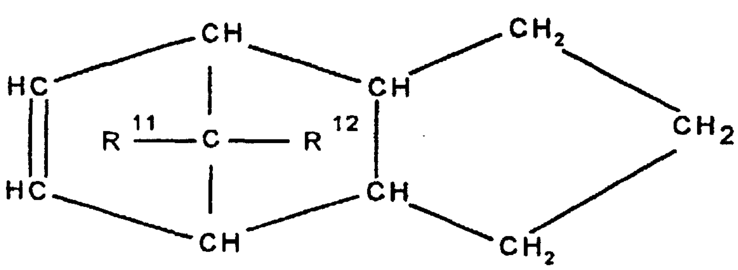

(V')

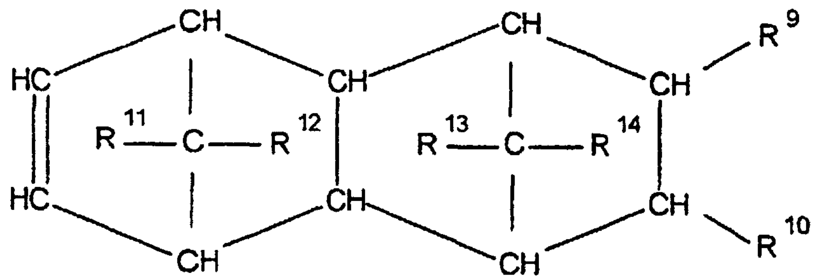

(VI)

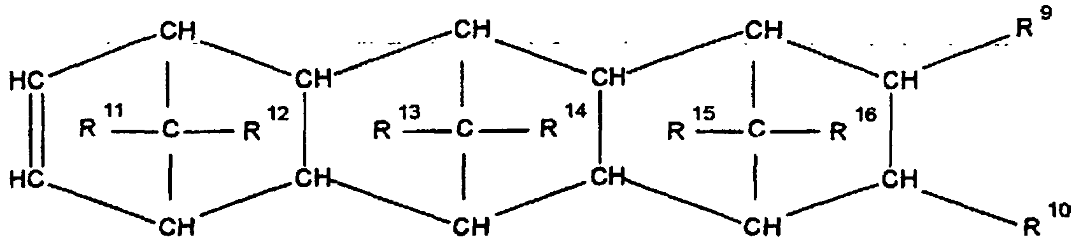

(VII)

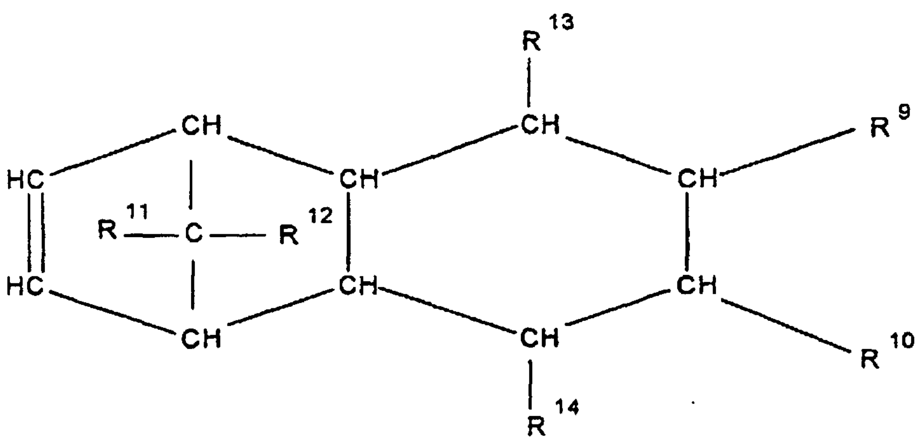

(VIII)

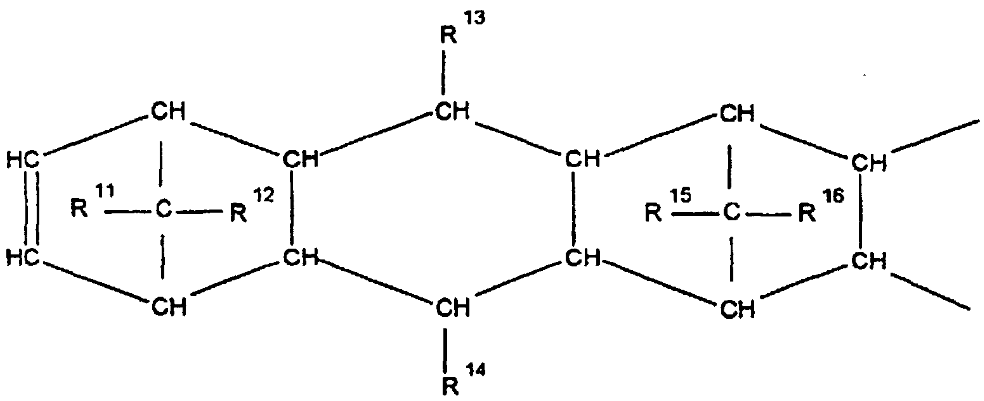

(IX)

worin $R^9$, $R^{10}$, $R^{11}$, $R^{12}$, $R^{13}$, $R^{14}$, $R^{15}$ und $R^{16}$ gleich oder verschieden sind und ein Wasserstoffatom oder einen Kohlenwasserstoffrest bedeuten, wobei gleiche Reste in den verschiedenen Formeln eine unterschiedliche Bedeutung haben können, 0 bis 99,9 Gew.-%, bezogen auf die Gesamtmenge der Monomeren, mindestens eines monocyclischen Olefins der Formel X

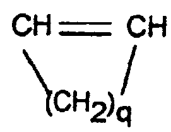

(X)

worin q eine Zahl von 2 bis 10 ist, und 0, 1 bis 99,9 Gew.-%, bezogen auf die Gesamtmenge der Monomeren, mindestens eines acyclischen 1-Olefins der Formel XI

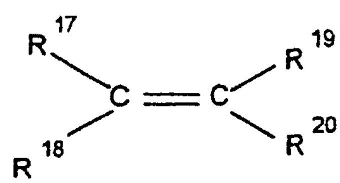

(XI)

worin $R^{17}$, $R^{18}$, $R^{19}$ und $R^{20}$ gleich oder verschieden sind und ein Wasserstoffatom oder einen Kohlenwasserstoffrest, bevorzugt einen $C_6$-$C_{10}$-Arylrest oder einen $C_1$-$C_8$-Alkylrest bedeuten, bei Temperaturen von -78 bis 150 °C, insbesondere 0 bis 100 °C und einem Druck von 0,01 bis 64 bar.

Bevorzugt sind Cycloolefine der Formeln IV oder VI, worin $R^9$, $R^{10}$, $R^{11}$, $R^{12}$, $R^{13}$, $R^{14}$, $R^{15}$ und $R^{16}$ gleich oder verschieden sind und ein Wasserstoffatom oder einen Kohlenwasserstoffrest, insbesondere einen $C_6$-$C_{10}$-Arylrest oder einen $C_1$-$C_8$-Alkylrest bedeuten, wobei gleiche Reste in den verschiedenen Formeln eine unterschiedliche Bedeutung haben können.

Gegebenenfalls werden ein oder mehrere monocyclische Olefine der Formel X für die Polymerisation verwendet.

Bevorzugt ist weiterhin ein acyclisches Olefin der Formel XI, worin $R^{17}$, $R^{18}$, $R^{19}$ und $R^{20}$ gleich oder verschieden sind und ein Wasserstoffatom oder einen Kohlenwasserstoffrest, bevorzugt einen $C_6$-$C_{10}$-Arylrest oder einen $C_1$-$C_8$-Alkylrest bedeuten, wie Ethylen, Propylen.

Insbesondere werden Copolymere von polycyclischen Olefinen, vorzugsweise der Formeln IV und VI, mit Ethylen hergestellt.

Besonders bevorzugte polycyclische Olefine sind Norbomen und Tetracyclododecen, wobei diese durch $C_1$-$C_6$-Alkyl substituiert sein können. Sie werden vorzugsweise mit Ethylen copolymerisiert. Ganz besonders bevorzugt sind Ethylen/ Norbornen-Copolymere und Ethylen/ Tetracyclododecen-Copolymere.

Das polycyclische Olefin wird in einer Menge von 0,1 bis 99,9 Gew.-% und das monocyclische Olefin in einer

Menge von 0 bis 99,9 Gew.-%, jeweils bezogen auf die Gesamtmenge der Monomeren, eingesetzt.

Die Konzentration des eingesetzten acyclischen Olefins ergibt sich aus dessen Löslichkeit in dem Reaktionsmedium bei gegebenem Druck und gegebener Temperatur.

Als polycyclische Olefine, monocyclische Olefine und acyclische Olefine sind auch Gemische zweier oder mehrerer Olefine des jeweiligen Typs zu verstehen. Das heißt, es können neben polycyclischen Bicopolymeren auch Ter- und Multicopolymere nach dem erfindungsgemäßen Verfahren hergestellt werden. Auch Copolymere monocyclischer Olefine und acyclischer Olefine können nach dem beschriebenen Verfahren erhalten werden.

Von den monocyclischen Olefinen ist Cyclopenten, das substituiert sein kann, bevorzugt.

Bevorzugt wird das Verfahren bei Temperaturen von -78 bis 150 °C, insbesondere 0 bis 100 °C, und einem Druck von 0,01 bis 64 bar durchgeführt.

Bei der Herstellung von Copolymerisaten kann die Variation der Molverhältnisse des polycyclischen Olefins zum eingesetzten offenkettigen Olefin in einem weiten Bereich erfolgen. Bevorzugt werden molare Verhältnisse von 3:1 bis 200:1 Cycloolefin zu offenkettigem Olefin eingesetzt. Durch die Wahl der Polymerisationstemperatur, durch die Konzentration der Katalysatorkomponenten und das eingesetzte Molverhältnis bzw. den Druck des gasförmigen, offenkettigen Olefins läßt sich die Einbaurate an Comonomer beinahe beliebig steuern. Bevorzugt werden Einbauraten zwischen 5 und 80 Mol-% der cyclischen Komponenten, besonders bevorzugt werden Einbauraten zwischen 15 und 60 Mol-% der cyclischen Komponenten, ganz besonders bevorzugt werden Einbauraten zwischen 35 und 55 Mol-% der cyclischen Komponenten.

Die nach dem Verfahren hergestellten Cycloolefincopolymere weisen Glastemperaturen zwischen -50 und 220 °C auf. Bevorzugt sind Glastemperaturen zwischen 0 und 180 °C, besonders bevorzugt sind Glastemperaturen zwischen 60 und 150 °C.

Die Polymerisation kann auch mehrstufig erfolgen, wobei auch Blockcopolymere entstehen können (DE-A-42 05 416).

Die mittlere Molmasse des gebildeten Polymeren läßt sich durch Wasserstoff-Dosierung, Variation der Katalysatorkonzentration oder Variation der Temperatur in bekannter Weise steuern.

Die nach dem Verfahren hergestellten Cycloolefincopolymere weisen massenmittlere Molmassen Mw zwischen zwischen 1.000 und 10.000.000 g/mol auf. Bevorzugt sind massenmittlere Molmassen zwischen 10.000 und 5.000.000 g/mol, besonders bevorzugt sind massenmittlere Molmassen zwischen 50.000 und 1.200.000 g/mol.

Die erfindungsgemäßen Cycloolefincopolymere weisen Viskositätszahlen zwischen zwischen 10 und 1000 ml/g auf. Bevorzugt sind Viskositätszahlen zwischen 30 und 500 ml/g, besonders bevorzugt sind Viskositätszahlen zwischen 50 und 300 ml/g.

Cycloolefincopolymere, die nicht nach dem Verfahren hergestellt wurden, weisen eine geringe Molmasse und eine geringe Zähigkeit auf, so daß diese Materialien für den kommerziellen Einsatz von geringem Interesse sind.

Es wurde nun überraschend festgestellt, daß nach dem Verfahren über einen breiten Bereich der Glastemperaturen Cycloolefincopolymere mit deutlich höheren Molmassen hergestellt werden können. Die erfindungsgemäßen Cycloolefincopolymere weisen eine höhere Schmelzefestigkeit und Zähigkeit auf und sind daher von besonderem Interesse für den kommerziellen Einsatz.

Die erfindungsgemäßen Cycloolefincopolymere weisen überraschenderweise eine hohe Reißdehnung auf.

Die Reißdehnung R der nach dem erfindungsgemäßen Verfahren hergestellten Cycloolefinpolymere ist gekennzeichnet durch Werte $R \geq -0{,}0375 \cdot Tg + 12$. Bevorzugt sind die nach dem erfindungsgemäßen Verfahren hergestellten Cycloolefincopolymere charakterisiert durch Werte $R \geq -0{,}0375 \cdot Tg + 17$. Besonders bevorzugt sind die nach dem erfindungsgemäßen Verfahren hergestellten Cycloolefincopolymere charakterisiert durch Werte $R \geq -0{,}0375 \cdot Tg + 22$.

Aufgrund der überraschenderweise festgestellten hohen Reißdehnung sind die erfindungsgemäßen Cycloolefincopolymere dem bekannten Stand der Technik deutlich überlegen.

Die erfindungsgemäßen Cycloolefincopolymeren hergestellten Formkörper zeichnen sich zusätzlich zu einer ausgezeichneten Beständigkeit gegen thermische und chemische Einflüsse durch eine sehr gute Beständigkeit gegen mechanische Beanspruchungen wie Zug-, Biege- und Schlagbeanspruchungen aus. Dadurch ist eine vielseitige Anwendbarkeit der nach dem erfindungsgemäßen Verfahren hergestellen Cycloolefincopolymere gegeben.

Als leicht zu ermittelnde rheologische Größe, die in direktem Zusammenhang zu den mechanischen Eigenschaften von Kunststoffen steht, beschreibt der Plateaumodul $G'_p$ die ausgezeichneten Eigenschaften der nach dem erfindungsgemäßen Verfahren hergestellten Cycloolefincopolymere.

Die elastischen Eigenschaften von Polymerschmelzen können im Schwingungsexperiment bestimmt werden. Der Speichermodul G' ist dabei ein Maß für die Deformationsenergie, die von dem Polymer reversibel gespeichert werden kann. Der Speichermodul G' durchläuft bei höheren Beanspruchungsfrequenzen ein gummielastischen Plateau (Plateauzone) [Retting, W., H.H. Laun, Kunststoffphysik, Carl Hansen Verlag, 1991; Ferry, J.D., Viscoelastic Properties of Polymers, J. Wiley & Sons, 1980] In der Plateauzone wird der Wert des Speichermoduls durch das Netzwerk der verhakten Polymermoleküle bestimmt. Die Beanspruchungsfrequenz ist in diesem Bereich so hoch, daß die Moleküle

nicht mehr voneinander abgleiten können, so daß die temporären Verhakungspunkte die gleiche Wirkung besitzen wir permanente Vernetzungspunkte in chemisch vernetzten Polymeren. Die eingebrachte Energie wird nur von den beweglichen Kettensegmenten zwischen den Verhakungspunkten aufgenommen. Der Speichermodul G' ist im Bereich des gummmielastischen Plateaus als Plateaumodul $G'_p$ definiert. Der Plateaumodul $G'_p$ dient als Maß für die Energie, die von dem temporären Netzwerk aufgenommen werden kann.

Der Zusammenhang zwischen dem Plateaumodul und den mechanischen Eigenschaften polymerer Festkörper ist umfassend in der Fachliteratur beschrieben. [Aharoni, S.M., Macromolecules 18, 2624 (1985); Mikar, A.G. et al., J. Chem. Phys. 88, 1337 (1988); Mikar, A.G. et al., J. Polym. Sci. B 27, 837 (1991); Wu, S., J. Polym. Sci 327, 723 (1989); Wu, S., Polym. Int. 29, 229 (1992)].

Es wurde überraschenderweise festgestellt, daß die erfindungsgemäßen Cycloolefincopolymere einen im Vergleich zu herkömmlichen Cycloolefincopolyrneren hohen Plateaumodul aufweisen, die dem folgenden Zusammenhang gehorchen:

$$\log G'_p \geq -0{,}0035 \cdot Tg + 6$$

Bevorzugt weist der Plateaumodul der erfindungsgemäßen Cycloolefinpolymere Werte auf, die dem folgenden Zusammenhang gehorchen:

$$\log G'_p \geq -0{,}0035 \cdot Tg + 6{,}03$$

Besonders bevorzugt weist der Plateaumodul der erfindungsgemäßen Cycloolefincopolymere Werte auf, die dem folgenden Zusammenhang gehorchen:

$$\log G'_p \geq -0{,}0035 \cdot Tg + 6{,}06$$

Die Polydispersität Mw/Mn der Copolymeren ist mit Werten von 1,5 bis 3,5 recht eng. Dadurch resultiert ein Eigenschaftsbild, das diese für das Spritzgießen besonders geeignet macht. Eine Anpassung der Polydispersität auch über die angegebenen Grenzen hinaus ist durch die Wahl des Katalysatorsystems möglich. Neben monomodalen Verteilungen sind nach dem erfindungsgemäßen Verfahren auch Cycloolefincopolymere mit bi- oder multimodalen Verteilungen herstellbar.

Bei der Wahl von Katalysatorsystemen nicht im Sinne des oben genannten Verfahrens können neben den Cycloolefincopolymeren Ethylenpolymerisate entstehen, die die Tranparenz des Materials herabsetzen. Durch die Unlöslichkeit dieser Ethylenpolymerisate kommt es außerdem im Prozeß zu Ablagerungen, die den Produktionsablauf stören und regelmäßige Reinigungsarbeiten erfordern.

Es hat sich nun überraschenderweise gezeigt, daß mit den für das Herstellungs verfahren zu verwendenden Katalysatorsystem keine Ethylenpolymerisate entstanden sind. Mit dem erfindungsgemäßen Verfahren lassen sich Cycloolefincopolymere hoher Transparenz herstellen.

Als besonders vorteilhaft hat sich die hohe Effektivität des Verfahrens in bezug auf die extrem hohe Aktivität des Katalysatorsystems erwiesen. Dadurch lassen sich nach dem gegenwärtigen Verfahren im Vergleich zu herkömmlichen Verfahren wesentlich höhere Ausbeuten des Cycloolefincopolymers erzielen. Damit bietet das Verfahren in Anbetracht der Katalysatorkosten einen deutlichen ökonomischen Vorteil.

Sowohl beim Extrudieren als auch beim Spritzgießen wurden bei Temperaturen von 300 °C weder Zersetzungsreaktionen noch ein Viskositätsabbau gefunden.

Die erfindungsgemäß hergestellten Materialien eignen sich besonders zur Herstellung von Formkörpern wie Extrusionsteilen (Folien, Platten, Schläuchen, Rohren, Stangen und Fasern) oder Spritzgußartikeln beliebiger Form und Größe. Eine wichtige Eigenschaft der erfindungsgemäßen Materialien sind ihre Transparenz, ihre Reinheit, die günstigen mechanischen Eigenschaften, die geringe Wasseraufnahme und die hohe Wasserdampfsperrwirkung.

Der mit einem Abbe-Refraktometer und Mischlicht bestimmte Brechungsindex der in den nachfolgenden Beispielen beschriebenen Reaktionsprodukte liegt im Bereich zwischen 1,520 und 1,555. Nachdem der Brechungsindex sehr nahe an dem von Kronglas (n = 1,51) liegt, können die erfindungsgemäßen Produkte als Glasersatz verschiedene Anwendungen im optischen Bereich finden wie beispielsweise Linsen, Prismen, Trägerplatten und -folien für optische Datenspeicher, für Videoplatten, für Compact Disks, als Deck- und Fokussierscheiben für Solarzellen, als Deck- und Streuscheiben für Leistungsoptiken, als Lichtwellenleiter in der Form von Fasern oder Folien. Aufgrund des beschriebenen Eigenschaftsprofils sind die erfindungsgemäß hergestellten Materialien von großem Interesse für den Bereich der Medizintechnik. Sie finden Einsatz als Materialien für Katheder, Beutel für Infusionslösungen oder Dialyseflüssigkeit, für Schläuche, Behälter, Implantate, Bestandteile von medizinischen Geräten. Außerdem werden sie in Form von Spritzgußteilen für Behälter, Fläschchen, Gläschen, Spritzen für die Aufbewahrung, den Austausch oder die Applikation von Flüssigkeiten verwendet. Die Eigenschaften der erfindungsgemäß hergestellten Cyclootefincopolymere machen sie besonders geeignet für den Einsatz in Form von Folien für den pharmazeutischen, lebensmitteltechnischen und technischen Bereich.

In schlagzähmodifizierter Form sind die erfindungsgemäß hergestellten Materialien als Strukturwerkstoff in verschiedenen technischen Bereichen einsetzbar (DE-A-42 13219).

Die erfindungsgemäß erhaltenen Polymere sind auch für die Herstellung von Polymerlegierungen einsetzbar. Die Legierungen können in der Schmelze oder in Lösung hergestellt werden. Die Legierungen weisen jeweils eine für bestimmte Anwendungen günstige Eigenschaftskombination der Komponenten auf. Für Legierungen mit den erfindungsgemäßen Polymeren sind bevorzugt folgende Polymere einsetzbar:

Polyethylen, Polypropylen, 1-(Ethylen-Propylen)-Copolymere, Polybutylen, Poly-(4-methyl-1-penten), Polyisopren, Polyisobutylen, Naturkautschuk, Poly-1-(Methylmethacrylat), weitere Polymethacrylate, Polyacrylate, (Acrylat-Methacrylat)-Copolymere, Polystyrol, (Styrol-Acrylnitril)-Copolymere, Bisphenol-A-Polycarbonat, weitere Polycarbonate, aromatische Polyestercarbonate, Polyethylenterephthalat, Polybutylenterephthalat, amorphe Polyarylate, Nylon-6, Nylon-66, weitere Polyamide, Polyaramide, Polyetherketone, Polyoxymethylen, Polyoxyethylen, Polyurethane, Polysulfone, Polyethersulfone, Polyvinylidenfluorid.

Oberflächen von Werkstücken und Formteilen hergestellt aus den erfindungsgemäßen Cycloolefincopolymeren können durch geeignete Verfahren wie Fluorierung, Coronabehandlung, Beflammung, Plasmabehandlung modifiziert werden. Dabei lassen sich Eigenschaften wie Haftung oder Bedruckbarkeit verändern, ohne daß die Anforderung der vorliegenden Erfindung beeinträchtigt wird.

Das erfindungsgemäße Verfahren liefert mit besonders hoher Katalysatoraktivität transparente Cycloolefincopolymere, die hohe Molmassen aufweisen.

Die in den folgenden Beispielen angegebenen Glastemperaturen Tg wurden mittels·DSC (Differential Scanning Calorimetry) bei einer Aufheizrate von 20 °C/min bestimmt. Die angegebenen Viskositätszahlen VZ wurden gemäß DIN 53728 in o-Dichlorbenzol bei 135 °C ermittelt. Die massenmittlere Molmasse und die Polydispersität wurden mittels GPC bestimmt.

Reißdehnungen und Streckspannungen wurden im Zugversuch nach ISO 527, Teil 1 und 2 mit einer Prüfgeschwindigkeit von 50 mm/min bestimmt.

Die schmelzerheologischen Eigenschaften zur Bestimmung des Plateaumoduls wurden in dynamischen Schwingungsexperiment mit einem schwergeschwindigkeitskontrollierten Gerät der Firma Rheometrics mit einer Platte-Platte-Geometrie ermittelt bei Frequenzen von $10^{-1}$ bis $5 \cdot 10^{2}$ $s^{-1}$.

Als Maß für die Katalysatoraktivität wird die Ausbeute an Polymer pro Zeiteinheit und pro mmol Metallocen herangezogen:

$$\text{Aktivität} = \frac{\text{Polymer [g]}}{\text{Zeiteinheit [h] x Menge Metallocen [mmol]}} = A$$

Die Erfindung wird durch folgende Beispiele näher erläutert:

Beispiele

Beispiel 1

In einem 1,5 $dm^3$-Autoklav, der vorher gründlich mit Ethen gespült wurde, werden 600 $cm^3$ einer 50 Gew. %igen Lösung von Norbornen in Toluol vorgelegt. Durch mehrfaches Aufdrücken von Ethen (6 bar) wurde die Lösung mit Ethen gesättigt. In den so vorbereiteten Reaktor wurden im Gegenstrom 10 $cm^3$ toluolische Methylaluminoxanlösung (10 Gew.%ige Methylaluminoxanlösung der Molmasse 1300 g/mol nach kryoskopischer Bestimmung) dosiert und 30 Minuten bei 70 °C gerührt. Eine Lösung von 0,37 mg Isopropylen(1-indenyl)(3-t-butylcyclopentadienyl)zirkondichlorid in 10 $cm^3$ toluolischer Methylaluminoxanlösung wurde nach 15 minütiger Voraktivierung zugegeben. Unter Rühren (750 UPM) wurde eine Stunde polymerisiert, wobei der Ethendruck durch Nachdosieren bei 6 bar gehalten wurde.

Nach Ende der Reaktionszeit wurde das Polymerisationsgemisch in ein Gefäß abgelassen und sofort in 5 $dm^3$ Aceton eingetragen, 10 Minuten gerührt und anschließend das ausgefallene Produkt filtriert. Der Filterkuchen wurde je dreimal abbwechselnd mit 10%iger Salzsäure und Aceton gewaschen, der Rückstand in Aceton aufgeschlämmt und erneut filtriert. Das so gereinigte Polmyer wurde bei 80 °C im Vakuum (0,2 bar) 15 Stunden getrocknet.

Nach der Trocknung wurden 40 g farbloses Polymer erhalten, welches ein Glastemperatur von 139°C, eine Viskositätszahl von 185 ml/g, eine gewichtsmittlere Molmasse von 147.000 g/mol und eine Molmassenverteilung von

1,9 aufwies. Die Aktivität A* betrug 47300 g/(mmol h).

Beispiel 2

In einem 1,5 $dm^3$-Autoklav, der vorher gründlich mit Ethen gespült wurde, werden 600 $cm^3$ einer 50 Gew. %igen Lösung von Norbornen in Toluol vorgelegt. Durch mehrfaches Aufdrücken von Ethen (3 bar) wurde die Lösung mit Ethen gesättigt. In den so vorbereiteten Reaktor wurden im Gegenstrom 10 $cm^3$ toluolische Methylaluminoxanlösung (10 Gew.%ige Methylaluminoxanlösung der Molmasse 1300 g/mol nach kryoskopischer Bestimmung) dosiert und 30 Minuten bei 70 °C gerührt. Eine Lösung von 0,61 mg Isopropylen(1-indenyl)(3-t-butylcyclopentadienyl)zirkondichlorid in 10 $cm^3$ toluolischer Methylaluminoxanlösung wurde nach 15 minütiger Voraktivierung zugegeben.
Unter Rühren (750 UPM) wurde eine Stunde polymerisiert, wobei der Ethendruck durch Nachdosieren bei 3 bar gehalten wurde.
Nach Ende der Reaktionszeit wurde das Polymerisationsgemisch in ein Gefäß abgelassen und sofort in 5 $dm^3$ Aceton eingetragen, 10 Minuten gerührt und anschließend das ausgefallene Produkt filtriert. Der Filterkuchen wurde je dreimal abwechselnd mit 10%iger Salzsäure und Aceton gewaschen, der Rückstand in Aceton aufgeschlämmt und erneut filtriert. Das so gereinigte Polmyer wurde bei 80 °C im Vakuum (0,2 bar) 15 Stunden getrocknet.
Nach der Trocknung wurden 29 g farbloses Polymer erhalten, welches eine Glastemperatur von 156 °C, eine Viskositätszahl von 260 ml/g, eine gewichtsmittlere Molmasse von 271.000 g/mol und eine Molmassenverteilung von 2,5 aufwies. Die Aktivität A* betrug 20700 g/(mmol h).

Beispiel 3

In einem 1,5 $dm^3$ -Autoklav, der vorher gründlich mit Ethen gespült wurde, werden 600 $cm^3$ einer 50 Gew. %igen Lösung von Norbornen in Toluol vorgelegt. Durch mehrfaches Aufdrücken von Ethen (12 bar) wurde die Lösung mit Ethen gesättigt. In den so vorbereiteten Reaktor wurden im Gegenstrom 10 $cm^3$ toluolische Methylaluminoxanlösung (10 Gew.%ige Methylaluminoxanlösung der Molmasse 1300 g/mol nach kryoskopischer Bestimmung) dosiert und 30 Minuten bei 70 °C gerührt. Eine Lösung von 0,13 mg Isopropylen(1-indenyl)(3-t-butylcyclopentadienyl)zirkondichlorid in 10 $cm^3$ toluolischer Methylaluminoxanlösung wurde nach 15 minütiger Voraktivierung zugegeben.
Unter Rühren (750 UPM) wurde eine Stunde polymerisiert, wobei der Ethendruck durch Nachdosieren bei 12 bar gehalten wurde.
Nach Ende der Reaktionszeit wurde das Polymerisationsgemisch in ein Gefäß abgelassen und sofort in 5 $dm^3$ Aceton eingetragen, 10 Minuten gerührt und anschließend das ausgefallene Produkt filtriert. Der Filterkuchen wurde je dreimal abwechselnd mit 10%iger Salzsäure und Aceton gewaschen, der Rückstand in Aceton aufgeschlämmt und erneut filtriert. Das so gereinigte Polmyer wurde bei 80 °C im Vakuum (0,2 bar) 15 Stunden getrocknet.
Nach der Trocknung wurden 45 g farbloses Polymer erhalten, welches eine Glastemperatur von 107°C, eine Viskositätszahl von 108 ml/g, eine gewichtsmittlere Molmasse von 82.000 g/mol und eine Molmassenverteilung von 1,8 aufwies. Die Aktivität A* betrug 151.800 g/(mmol h).

Beispiel 4

In einem 1,5 $dm^3$-Autoklav, der vorher gründlich mit Ethen gespült wurde, werden 600 $cm^3$ einer 50 Gew. %igen Lösung von Norbornen in Toluol vorgelegt. Durch mehrfaches Aufdrücken von Ethen (1 8 bar) wurde die Lösung mit Ethen gesättigt. In 10 den so vorbereiteten Reaktor wurden im Gegenstrom 10 $cm^3$ toluolische Methylaluminoxanlösung (1 0 Gew. %ige Methylaluminoxanlösung der Molmasse 1300 g/mol nach kryoskopischer Bestimmung) dosiert und 30 Minuten bei 70 °C gerührt. Eine Lösung von 0,06 mg Isopropylen(1-indenyl)(3-t-butylcyclopentadienyl) zirkondichlorid in 10 $cm^3$ toluolischer Methylaluminoxanlösung wurde nach 15 minütiger Voraktivierung zugegeben.
Unter Rühren (750 UPM) wurde eine Stunde polymerisiert, wobei der Ethendruck durch Nachdosieren bei 18 bar gehalten wurde.
Nach Ende der Reaktionszeit wurde das Polymerisationsgemisch in ein Gefäß abgelassen und sofort in 5 $dm^3$ Aceton eingetragen, 10 Minuten gerührt und anschließend das ausgefallene Produkt filtriert. Der Filterkuchen wurde je dreimal abwechselnd mit 10%iger Salzsäure und Aceton gewaschen, der Rückstand in Aceton aufgeschlämmt und emeut filtriert. Das so gereinigte Polmyer wurde bei 80 °C im Vakuum (0,2 bar) 15 Stunden getrocknet.
Nach der Trocknung wurden 22 g farbloses Polymer erhalten, welches eine Glastemperatur von 85 °C und eine Viskositätszahl von 94 ml/g aufwies. Die Aktivität A* betrug 160.800 g/(mmol h).

Beispiele 5 und 6

In einem 1,5 $dm^3$-Autoklav, der vorher gründlich mit Ethen gespült wurde, werden 600 $cm^3$ einer Lösung von

Norbomen in Toluol vorgelegt. Durch mehrfaches Aufdrücken von Ethen (18 bar) wurde die Lösung mit Ethen gesättigt. In den so vorbereiteten Reaktor wurden im Gegenstrom 5 $cm^3$ toluolische Methylaluminoxanlösung (10 Gew.%ige Methylaluminoxanlösung der Molmasse 300 g/mol nach kryoskopischer Bestimmung) dosiert und 30 Minuten bei 70 °C gerührt. Eine Lösung von Isopropylen(1-indenyl)(3-t-butylcyclopentadienyl)zirkondichlorid in 5 $cm^3$ toluolischer Methylaluminoxanlösung wurde nach 15 minütiger Voraktivierung zugegeben.

Unter Rühren (750 UPM) wurde eine Stunde polymerisiert, wobei der Ethendruck durch Nachdosieren bei 18 bar gehalten wurde.

Nach Ende der Reaktionszeit wurde das Polymerisationsgemisch in ein Gefäß abgelassen und sofort in 5 $dm^3$ Aceton eingetragen, 10 Minuten gerührt und anschließend das ausgefallene Produkt filtriert. Der Filterkuchen wurde je dreimal abwechselnd mit 10%iger Salzsäure und Aceton gewaschen, der Rückstand in Aceton aufgeschlämmt und emeut filtriert. Das so gereinigte Polmyer wurde bei 80 °C im Vakuum (0,2 bar) 15 Stunden getrocknet.

Es wurde ein farbloses Polymer enthalten. Die ergänzenden Reaktionsbedingungen und die charakteristischen Daten des Polymers sind in Tabelle 1 zusammengefaßt,

Tabelle 1

| Bsp. | Monomerlsg. [Gew.-% Norb.] | Katalysatormenge [mg] | Aktivität A* [g/mmol h)] | Ausbeute [g] | Tg [°C] | VZ [ml/g] |
|---|---|---|---|---|---|---|
| 5 | 50 | 0,05 | 92.100 | 10,5 | 83 | 80 |
| 6 | 30 | 0,09 | 238.800 | 49 | 46 | 64 |

Beispiel 7 bis 15

In einem 1 $dm^3$-Autoklav, der vorher gründlich mit Ethen gespült wurde, werden 400 $cm^3$ einer 85 Gew.%igen Lösung von Norbomen in Toluol vorgelegt. Durch mehrfaches Aufdrücken von Ethen wurde die Lösung mit Ethen gesättigt. In den so vorbereiteten Reaktor wurden im Gegenstrom 1 $cm^3$ toluolische Methylaluminoxanlösung (10 Gew. %ige Methylaluminoxanlösung der Molmasse 1300 g/mol nach kryoskopischer Bestimmung) dosiert und 30 Minuten bei 70 °C gerührt. Eine Lösung von 0,35 mg Lösung Isopropylen(1-indenyl)(3-t-butylcyclopentadienyl)zirkondichlorid in 1 $cm^3$ toluolischer Methylaluminoxanlösung wurde nach 15 minütiger Voraktivierung zugegeben.

Unter Rühren (800 UPM) wurde polymerisiert, wobei der Ethendruck durch Nachdosieren gehalten wurde.

Nach Ende der Reaktionszeit wurde das Polymerisationsgemisch in ein Gefäß abgelassen und sofort in 5 $dm^3$ Aceton eingetragen, 10 Minuten gerührt und anschließend das ausgefallene Produkt filtriert. Der Filterkuchen wurde dreimal mit Aceton gewaschen. Das so erhaltene Polmyer wurde bei 70 °C im Vakuum (0,2 bar) 15 Stunden getrocknet. Es wurde ein farbloses Polymer enthalten. Die ergänzenden Reaktionsbedingungen und die charakteristischen Daten des Polymers sind in Tabelle 2 und 3 zusammengefaßt.

Tabelle 2

| Bsp. | Ethylendruck [bar] | Polymerisationszeit [min] | Ausbeute [g] | Aktivität A* [g/(mmol)] |
|---|---|---|---|---|
| 7 | 20,9 | 10 | 19,2 | 144.000 |
| 8 | 14,9 | 15 | 18,1 | 90.500 |
| 9 | 10,4 | 15 | 13 | 65.000 |
| 10 | 4,7 | 34 | 11,3 | 24.200 |
| 11 | 26,2 | 10 | 26 | 195.000 |
| 12 | 32,5 | 10 | 32 | 240.000 |
| 13 | 39,9 | 11 | 45,3 | 308.900 |
| 14 | 46,5 | 11 | 56 | 381.800 |
| 15 | 58 | 8 | 52 | 487.500 |

Tabelle 3

| Bsp. | Tg [°C] | VZ [ml/g] | Mw [g/mol] | Mw/Mn |
|---|---|---|---|---|
| 7 | 121 | 169 | 222.000 | 1,6 |

Tabelle 3 (fortgesetzt)

| Bsp. | Tg [°C] | VZ [ml/g] | Mw [g/mol] | Mw/Mn |
|---|---|---|---|---|
| 8 | 135 | 226 | 322.000 | 1,5 |
| 9 | 145 | 307 | 422.000 | 1,7 |
| 10 | 155 | - | 793.000 | 1,5 |
| 11 | 113 | 147 | 189.000 | 1,6 |
| 12 | 99,5 | - | 162.000 | 1,5 |
| 13 | 85 | 90 | 128.000 | 1,6 |
| 14 | 76 | 92 | 104.000 | 1,6 |
| 15 | 57 | 84 | 83.000 | 1,6 |

Beispiel 16

In einem 1 $dm^3$-Autoklav, der vorher gründlich mit Ethen gespült wurde, werden 400 $cm^3$ einer 42 Gew.%igen Lösung von Norbornen in Toluol vorgelegt. Durch mehrfaches Aufdrücken von Ethen (53,6 bar) wurde die Lösung mit Ethen gesättigt.

In den so vorbereiteten Reaktor wurden im Gegenstrom 1 $cm^3$ toluolische Methylaluminoxanlösung (10 Gew. %ige Methylaluminoxanlösung der Molmasse 1300 g/mol nach kryoskopischer Bestimmung) dosiert und 30 Minuten bei 70 °C gerührt. Eine Lösung von 0,35 mg Lösung Isopropylen(1-indenyl)(3-t-butylcyclopentadienyl)zirkondichlorid in 1 $cm^3$ toluolischer Methylaluminoxanlösung wurde nach 15 minütiger Voraktivierung zugegeben.

Unter Rühren (800 UPM) wurde 8 Minuten polymerisiert, wobei der Ethendruck durch Nachdosieren bei 53,6 bar gehalten wurde.

Nach Ende der Reaktionszeit wurde das Polymerisationsgemisch in ein Gefäß abgelassen und sofort in 5 $dm^3$ Aceton eingetragen, 1 0 Minuten gerührt und anschließend das ausgefallene Produkt filtriert. Der Filterkuchen wurde dreimal mit Aceton gewaschen. Das so erhaltene Polmyer wurde bei 70 °C im Vakuum (0,2 bar) 15 Stunden getrocknet.

Nach der Trocknung wurden 70 g farbloses Polymer erhalten, welches ein Glastemperatur von 13 °C und eine Viskositätszahl von 67 ml/g, eine gewichtsmittlere Molmasse von 57.000 g/mol und eine Molmassenverteilung von 1,5 aufwies. Die Aktivität A* betrug 656.300 g/(mmol h).

Vergleichsbeispiel 1 bis 3

In einem 70 $dm^3$ -Autoklav, der vorher gründlich mit Ethen gespült wurde, wurde eine Lösung von Norbomen in Toluol vorgelegt. Durch mehrfaches Aufdrücken von Ethen wurde die Lösung mit Ethen gesättigt. In den so vorbereiteten Reaktor wurden im Gegenstrom 400 $cm^3$ toluolische Methylaluminoxanlösung (10 Gew.%ige Methylaluminoxanlösung der Molmasse 1300 g/mol nach kryoskopischer Bestimmung) dosiert und 30 Minuten bei 70 °C gerührt. Eine Lösung von Isopropylen(cyclopentadienyl)(1-indenyl)zirkondichlorid in 300 $cm^3$ toluolischer Methylaluminoxanlösung wurde nach 30 minütiger Voraktivierung zugegeben.

Unter Rühren (750 UPM) wurde eine Stunde polymerisiert, wobei der Ethendruck durch Nachdosieren gehalten wurde.

Nach Ende der Reaktionszeit wurde das Polymerisationsgemisch in ein Gefäß abgelassen und sofort in 300 $dm^3$ Aceton eingetragen, 30 Minuten gerührt und anschließend das ausgefallene Produkt filtriert. Der Filterkuchen wurde je dreimal abbwechselnd mit 10%iger Salzsäure und Aceton gewaschen, der Rückstand in Aceton aufgeschlämmt und erneut filtriert. Das so gereinigte Polmyer wurde bei 80 °C im Vakuum (0,2 bar) 15 Stunden getrocknet.

Es wurde ein farbloses Polymer enthalten. Die ergänzenden Reaktionsbedingungen und die charakteristischen Daten des Polymers sind in Tabelle 4 und 5 zusammengefaßt.

Tabelle 4

| Vergl.-Bsp. | Monomerlsg. [Gew.-% Norb.] | Monomerlsg. [$dm^3$] | Katalysator [mg] | Ethylendruck [bar] | Ausbeute [kg] |
|---|---|---|---|---|---|
| 1 | 60 | 30 | 100 | 20 | 8 |
| 2 | 40 | 50 | 160 | 22 | 7,4 |

Tabelle 4 (fortgesetzt)

| Vergl.-Bsp. | Monomerlsg. [Gew.-% Norb.] | Monomerlsg. [$dm^3$] | Katalysator [mg] | Ethylendruck [bar] | Ausbeute [kg] |
|---|---|---|---|---|---|
| 3 | 40 | 32 | 100 | 20 | 7 |

Tabelle 5

| Vergl.-Bsp. | Aktivität A* [g/(mmol*h)] | Tg [°C] | VZ [ml/g] | $M_w$ [bar] | $M_w/M_n$ |
|---|---|---|---|---|---|
| 1 | 30.600 | 105 | 47 | 29.000 | 1,9 |
| 2 | 17.700 | 89 | 41 | 21.000 | 1,9 |
| 3 | 26.800 | 82 | 38 | 21.000 | 1,8 |

Vergleichsbeispiel 4 bis 7

In einem 1,5 $dm^3$-Autoklav, der vorher gründlich mit Ethen gespült wurde, werden 600 $cm^3$ einer Lösung von Norbornen in Toluol vorgelegt. Durch mehrfaches Aufdrücken von Ethen (18 bar) wurde die Lösung mit Ethen gesättigt. In den so vorbereiteten Reaktor wurden im Gegenstrom 5 $cm^3$ toluolische Methylaluminoxanlösung (10 Gew.-%ige Methylaluminoxanlösung der Molmasse 1300 g/mol nach kryoskopischer Bestimmung) dosiert und 30 Minuten bei 70 °C gerührt. Eine Lösung von Isopropylen(1-indenyl)(cyclopentadienyl)zirkondichlorid in 5 $cm^3$ toluolischer Methylaluminoxanlösung wurde nach 15 minütiger Voraktivierung zugegeben.

Unter Rühren (750 UPM) wurde eine Stunde polymerisiert, wobei der Ethendruck durch Nachdosieren gehalten wurde.

Nach Ende der Reaktionszeit wurde das Polymerisationsgemisch in ein Gefäß abgelassen und sofort in 5 $dm^3$ Aceton eingetragen, 10 Minuten gerührt und anschließend das ausgefallene Produkt filtriert. Der Filterkuchen wurde je dreimal abwechselnd mit 10%iger Salzsäure und Aceton gewaschen, der Rückstand in Aceton aufgeschlämmt und erneut filtriert. Das so gereinigte Polmyer wurde bei 80 °C im Vakuum (0,2 bar) 15 Stunden getrocknet.

Es wurde ein farbloses Polymer enthalten. Die ergänzenden Reaktionsbedingungen und die charakteristischen Daten des Polymers sind in Tabelle 6 und 7 zusammengefaßt.

Tabelle 6

| Vergl.-Bsp. | Monomerlsg. [Gew.-% Norb.] | Katalysator [mg] | Ethylendruck [bar] |
|---|---|---|---|
| 4 | 85 | 1,2 | 6 |
| 5 | 50 | 1,03 | 3 |
| 6 | 85 | 1,14 | 18 |
| 7 | 50 | 0,45 | 12 |

Tabelle 7

| Vergl.-Bsp. | Ausbeute [kg] | Aktivität A* [g/(mmol*h)] | Tg [°C] | VZ [ml/g] |
|---|---|---|---|---|
| 4 | 44,8 | 14.300 | 184 | 67 |
| 5 | 33,6 | 12.500 | 181 | 81 |
| 6 | 99,8 | 33.500 | 140 | 78 |
| 7 | 55,6 | 36.400 | 122 | 64 |

Vergleichsbeispiele 8 bis 11

In einem 1,5 $dm^3$-Autoklav, der vorher gründlich mit Ethen gespült wurde, wurde eine Lösung von 600 $cm^3$ Norbornen in Toluoi vorgelegt. Durch mehrfaches Aufdrücken von Ethen wurde die Lösung mit Ethen (6 bar) gesättigt. In den so vorbereiteten Reaktor wurden im Gegenstrom 20 $cm^3$ toluolische Methylaluminoxanlösung (10 Gew.%ige

Methylaluminoxanlösung der Molmasse 1300 g/mol nach kryoskopischer Bestimmung) dosiert und 30 Minuten bei 70 °C gerührt. Eine Lösung von Dimethylsilylbis(1-indenyl)zirkondichlorid in 20 $cm^3$ toluolischer Methylaluminoxanlösung wurde nach 15 minütiger Voraktivierung zugegeben.

Unter Rühren (750 UPM) wurde eine Stunde polymerisiert, wobei der Ethendruck durch Nachdosieren bei 6 bar gehalten wurde.

Nach Ende der Reaktionszeit wurde das Polymerisationsgemisch in ein Gefäßabgelassen und sofort in 5 $dm^3$ Aceton eingetragen, 10 Minuten gerührt und anschließend das ausgefallene Produkt filtriert. Der Filterkuchen wurde je dreimal abwechselnd mit 10%iger Salzsäure und Aceton gewaschen, der Rückstand in Aceton aufgeschlämmt und erneut filtriert. Das so gereinigte Polmyer wurde bei 80 °C im Vakuum (0,2 bar) 15 Stunden getrocknet.

Es wurde ein farbloses Polymer erhalten. Die ergänzenden Reaktionsbedingungen und die charakteristischen Daten des Polymers sind in Tabelle 8 zusammengefaßt.

Tabelle 8

| Vergl Bsp. | Monomerlösung [Gew.-%Norb.] | Katalysatormenge [mg] | Ausbeute [g] | Aktivität A* [g/(mmol*h)] | Tg [°C] | Tm [°C] | VZ [ml/g] |
|---|---|---|---|---|---|---|---|
| 8 | 85 | 5 | 21 | 1.884 | 122 | 122 | 45 |
| 9 | 85 | 5 | 20 | 1.794 | 178 | 118 | 65 |
| 10 | 80 | 0,5 | 2,5 | 2243 | 138 | 120 | 45 |
| 11 | 30 | 60 | 180 | 1346 | 103 | 115 | 86 |

Vergleichsbeispiele 12 bis 15

In einem 1,5 $dm^3$-Autoklav, der vorher gründlich mit Ethen gespült wurde, wurde eine Lösung von 600 $cm^3$ Norbomen in Toluol vorgelegt. Durch mehrfaches Aufdrücken von Ethen wurde die Lösung mit Ethen gesättigt. In den so vorbereiteten Reaktor wurden im Gegenstrom 10 $cm^3$ toluolische Methylaluminoxanlösung (10 Gew.%ige Methylaluminoxanlösung der Molmasse 1300 g/mol nach kryoskopischer Bestimmung) dosiert und 30 Minuten bei 70 °C gerührt. Eine Lösung von 1,8 mg Dimethylsilyl(cyclopentadienyl)(1-indenyl)zirkondichlorid in 10 $cm^3$ toluolischer Methylaluminoxanlösung wurde nach 15 minütiger Voraktivierung zugegeben.

Unter Rühren (750 UPM) wurde eine Stunde polymerisiert, wobei der Ethendruck durch Nachdosieren gehalten wurde.

Nach Ende der Reaktionszeit wurde das Polymerisationsgemisch in ein Gefäß abgelassen und sofort in 5 $dm^3$ Aceton eingetragen, 10 Minuten gerührt und anschließend das ausgefallene Produkt filtriert. Der Filterkuchen wurde je dreimal abwechselnd mit 10%iger Salzsäure und Aceton gewaschen, der Rückstand in Aceton aufgeschlämmt und erneut filtriert. Das so gereinigte Polymer wurde bei 80 °C im Vakuum (0,2 bar) 15 Stunden getrocknet.

Es wurde ein farbloses Polymer enthalten. Die ergänzenden Reaktionsbedingungen und die charakteristischen Daten des Polymers sind in Tabelle 9 zusammengefaßt.

Tabelle 9

| Vergl Bsp. | Monomerlösung [Gew.-%Norb.] | Ethylendruck [bar] | Ausbeute [g] | Aktivität A* [g/(mmol*h)] | Tg [°C] | VZ [ml/g] |
|---|---|---|---|---|---|---|
| 12 | 85 | 6 | 9,4 | 2.081 | 214 | 68 |
| 13 | 85 | 18 | 14,6 | 3.232 | 161 | 130 |
| 14 | 50 | 18 | 33,9 | 7.505 | 112 | 132 |
| 15 | 30 | 18 | 46,8 | 10.361 | 68 | 130 |

Beispiel 17 bis 28

In einem 1,5 $dm^3$- Autoklav, der vorher gründlich mit Ethen gespült wurde, wurden 600 $cm^3$ einer Lösung von Norbomen in einem Lösungsmittel vorgelegt. Durch mehrfaches Aufdrücken von Ethen wurde die Lösung mit Ethen gesättigt. In den so vorbereiteten Reaktor wurde im Gegenstrom eine toluolische Methylaluminoxanlösung (10 Gew. %ige Methylaluminoxanlösung der Molmasse 1300 g/mol nach kryoskopischer Bestimmung) dosiert und 30 Minuten bei 70°C gerührt. Eine Lösung des Metallocens in toluolischer Methylaluminoxanlösung wurde nach 15minütiger Voraktivierung zugegeben.

Unter Rühren (750 UPM) wurde eine Stunde polymerisiert, wobei der Ethendruck durch Nachdosieren gehalten wurde.

Nach Ende der Reaktionszeit wurde das Polymerisationsgemisch in ein Gefäß abgelassen und sofort in 5 $dm^3$ Aceton eingetragen, 10 Minuten gerührt und anschließend das ausgefallene Produkt filtriert. Der Filterkuchen wurde je dreimal abwechselnd mit 10%iger Salzsäure und Aceton gewaschen, der Rückstand in Aceton aufgeschlämmt und erneut filtriert. Das so gereinigte Polymer wurde bei 80°C im Vakuum (0,2 bar) 15 Stunden getrocknet.

Es wurde ein farbloses Polymer erhalten. Die ergänzenden Reaktionsbedingungen und die charakteristischen Daten des Polymers sind in Tabelle 10 und 11 zusammengefaßt.

Tabelle 10

| Beispiel | Monomerlösung [Gew.-% Norb.] | Lösungsmittel | Methylaluminoxanlösung [ml] | Metallocenmenge [mg] | Methylaluminoxanlösung für Metallocen [ml] | Ethendruck [bar] |
|---|---|---|---|---|---|---|
| 17 | 50 | Toluol | 10 | 0,06 | 10 | 18 |
| 18 | 30 | Toluol | 5 | 0,09 | 5 | 18 |
| 19 | 50 | Toluol | 5 | 0,15 | 5 | 18 |
| 20 | 50 | Toluol | 10 | 0,08 | 10 | 6 |
| 21 | 50 | Toluol | 10 | 0,04 | 10 | 18 |
| 22 | 50 | Toluol | 10 | 0,6 | 10 | 6 |
| 23 | 50 | Dekalin | 5 | 0,16 | 5 | 18 |
| 24 | 50 | Dekalin | 2 | 0,67 | 2 | 18 |
| 25 | 45 | Dekalin | 1 | 0,34 | 1 | 18 |
| 26 | 45 | Dekalin | 1 | 0,29 | 1 | 18 |
| 27 | 45 | Dekalin | 2,5 | 0,3 | 2,5 | 18 |
| 28 | 45 | Dekalin | 1 | 1.47 | 1 | 18 |

Beispiele 17, 18, 19, 22, 23 und 24:

Als Metallocen wurde Isopropylen(1-indenyl)(3-t-butylcyclopentadienyl)zirkondichlorid verwendet.

Beispiele 20, 21, 25, 26, 27 und 28:

Als Metallocen wurde Isopropylen(1-indenyl)(3-i-propylcyclopentadienyl)zirkondichlorid verwendet.

Tabelle 11

| Beispiel | Ausbeute [g] | Tg [°C] | VZ [ml/g] | Aktivität [g/(mmol h)] | $G_P$' [Pa] |
|---|---|---|---|---|---|
| 17 | 22 | 84,5 | 93,7 | 161.000 | 678.000 |
| 18 | 49 | 46,5 | 63,8 | 239.000 | 700.000 |
| 19 | 20 | 90,8 | 97,7 | 58.500 | 648.000 |
| 20 | 29,5 | 147,6 | 121,1 | 157.000 | 363.000 |
| 21 | 35 | 97,8 | 75,6 | 307.000 | 582.000 |
| 22 | 50,9 | 131,9 | 101,8 | 37.200 | 529.000 |
| 23 | 26 | 95,8 | 97,1 | 71.300 | 549.000 |
| 24 | 65 | 89,5 | 71,0 | 42.500 | 514.000 |
| 25 | 16 | 110,5 | 116,7 | 20.000 | 515.000 |
| 26 | 29 | 109,2 | 77,2 | 42.400 | 542.000 |
| 27 | 33,2 | 99,8 | 90,4 | 47.000 | 557.000 |
| 28 | 65.3 | 105,7 | 95.6 | 18.900 | 534.000 |

Beispiel 29 bis 32

In einem 70 $dm^3$- Autoklav, der vorher gründlich mit Ethen gespült wurde, wurde eine 50 Gew.%-ige Lösung von Norbornen in Toluol vorgelegt. Durch mehrfaches Aufdrücken von Ethen wurde die Lösung mit Ethen gesättigt. In den so vorbereiteten Reaktor wurde im Gegenstrom eine toluolische Methylaluminoxanlösung (10 Gew.%ige Methylaluminoxanlösung der Molmasse 1300 g/mol nach kryoskopischer Bestimmung) dosiert und 30 Minuten bei 70°C gerührt. Eine Lösung des Metallocens in toluolischer Methylaluminoxanlösung wurde nach 30minütiger Voraktivierung zugegeben.

Unter Rühren (750 UPM) wurde eine Stunde polymerisiert, wobei der Ethendruck durch Nachdosieren gehalten wurde.

Nach Ende der Reaktionszeit wurde das Polymerisationsgemisch in ein Gefäß abgelassen und sofort in 300 $dm^3$ Aceton eingetragen, 30 Minuten gerührt und anschließend das ausgefallene Produkt filtriert. Der Filterkuchen wurde je dreimal abwechselnd mit 10%iger Salzsäure und Aceton gewaschen, der Rückstand in Aceton aufgeschlämmt und erneut filtriert. Das so gereinigte Polymer wurde bei 80°C im Vakuum (0,2 bar) 15 Stunden getrocknet.

Es wurde ein farbloses Polymer erhalten. Die ergänzenden Reaktionsbedingungen und die charakteristischen Daten des Polymers sind in Tabelle 12 und 13 zusammengefaßt.

Tabelle 12

| Beispiel | Methylaluminoxanlösung [ml] | Metallocenmenge [mg] | Methylaluminoxanlösung für Metallocen [ml] | Ethendruck [bar] |
|---|---|---|---|---|
| 29 | 50 | 60 | 250 | 20 |
| 30 | 50 | 30 | 300 | 20 |
| 31 | 50 | 15 | 150 | 20 |
| 32 | 50 | 15 | 125 | 20 |

Beispiele 29 und 32:

Als Metallocen wurde Isopropylen(1-indenyl)(3-t-butylcyclopentadienyl)zirkondichlorid verwendet.

Beispiele 30 und 31:

Als Metallocen wurde Isopropylen(1-indenyl)(3-i-propylcyclopentadienyl)zirkondichlorid verwendet.

Tabelle 13

| Beispiel | Tg[°C] | VZ [ml/g] | Reißdehnung [%] | Streckspannung [MPa] | Ethendruck [bar] |
|---|---|---|---|---|---|
| 29 | 80 | 83 | > 92 | 56 | 20 |
| 30 | 92 | 74 | 58 | 60 | 20 |
| 31 | 96 | 80 | 33 | 63 | 20 |
| 32 | 86 | 84 | 50 | 57 | ?0 |

Vergleichsbeispiel 16 bis 25

In einem 1,5 $dm^3$- Autoklav, der vorher gründlich mit Ethen gespült wurde, werden 600 $cm^3$ einer Lösung von Norbornen in Toluol vorgelegt. Durch mehrfaches Aufdrücken von Ethen wurde die Lösung mit Ethen gesättigt. In den so vorbereiteten Reaktor wurden im Gegenstrom 5 ml toluolische Methylaluminoxanlösung (10 Gew.%ige Methylaluminoxanlösung der Molmasse 1300 g/mol nach kryoskopischer Bestimmung) dosiert und 30 Minuten bei 70°C gerührt. Eine Lösung des Metallocens in 5 ml toluolischer Methylaluminoxanlösung wurde nach 15minütiger Voraktivierung zugegeben.

Unter Rühren (750 UPM) wurde eine Stunde polymerisiert, wobei der Ethendruck durch Nachdosieren gehalten wurde.

Nach Ende der Reaktionszeit wurde das Polymerisationsgemisch in ein Gefäß abgelassen und sofort in 5 $dm^3$ Aceton eingetragen, 10 Minuten gerührt und anschließend das ausgefallene Produkt filtriert. Der Filterkuchen wurde je dreimal abwechselnd mit 10%iger Salzsäure und Aceton gewaschen, der Rückstand in Aceton aufgeschlämmt und erneut filtriert. Das so gereinigte Polymer wurde bei 80°C im Vakuum (0,2 bar) 15 Stunden getrocknet.

Es wurde ein farbloses Polymer erhalten. Die ergänzenden Reaktionsbedingungen und die charakteristischen Daten des Polymers sind in Tabelle 14 und 15 zusammengefaßt.

Tabelle 14

| Vergleichsbeispiel | Monomerlösung [Gew.-% Norb.] | Metallocen | Metallocenmenge [mg] | Ethendruck [bar] |
|---|---|---|---|---|
| 16 | 85 | Isopropylen (1-indenyl) cyclopentadienylzirkandichlorid | 1,5 | 6 |
| 17 | 85 | Dimethylsilyl-bis(1-indenyl) zirkondichlorid | 10 | 6 |
| 18 | 85 | Diphenylmethylen(9fluorenyl) cyclopentadienylzirkondichlorid | 2,7 | 6 |
| 19 | 85 | Isopropylen(4,5-benzo-1-indenyl) cyclopentadienylzirkondichlorid | 1 | 6 |
| 20 | 85 | Dimethylsilyl(4,5-benzo-1-indenyl) cyclopentadienylzirkondichlorid | 1 | 6 |
| 21 | 50 | Isopropylen (1-indenyl) cyclopentadienylzirkondichlorid | 1 | 18 |
| 22 | 50 | Isopropylen-bis(1-indenyl) zirkondichlorid | 1 | 18 |

Tabelle 14 (fortgesetzt)

| Vergleichsbeispiel | Monomerlösung [Gew.-% Norb.] | Metallocen | Metallocenmenge [mg] | Ethendruck [bar] |
|---|---|---|---|---|
| 23 | 50 | Isopropylen-bis(1-indenyl) zirkondichlorid | 1 | 18 |
| 24 | 50 | Isopropylen-bis(1-indenyl) zirkondichlorid | 1 | 18 |
| 25 | 50 | Isopropylen-bis(1-indenyl) zirkondichlorid | 1 | 12 |

Tabelle 15

| Vergleichsbeispiel | Tg [°C] | VZ [ml/g] | Reißdehnung [%] | Streckspannung [MPa] |
|---|---|---|---|---|
| 16 | 197 | 67 | 3,60 | - |
| 17 | 127 | 123 | 3,58 | - |
| 18 | 160 | 172 | 3,36 | - |
| 19 | 180 | 96 | 3,55 | - |
| 20 | 224 | 56 | 3,30 | - |
| 21 | 89 | 41 | 2,9 | - |
| 22 | 78 | 99 | 5,1 | 62 |
| 23 | 80 | 121 | 8,3 | 61 |
| 24 | 78 | 89 | 8,2 | 31 |
| 25 | 109 | 115 | 4,2 | - |

Vergleichsbeispiel 26 bis 30

In einem 1,5 $dm^3$- Autoklav, der vorher gründlich mit Ethen gespült wurde, werden 600 $cm^3$ einer Lösung von Norbornen in Toluol vorgelegt. Durch mehrfaches Aufdrücken von Ethen wurde die Lösung mit Ethen gesättigt. In den so vorbereiteten Reaktor wurden im Gegenstrom 5 ml toluolische Methylaluminoxanlösung (10 Gew.%ige Methylaluminoxanlösung der Molmasse 1300 g/mol nach kryoskopischer Bestimmung) dosiert und 30 Minuten bei 70°C gerührt. Zur Regelung der Molmasse wurde in einigen Fällen an dieser Stelle Wasserstoff zudosiert. Eine Lösung des Metallocens in 5 ml toluolischer Methylaluminoxanlösung wurde nach 15minütiger Voraktivierung zugegeben.

Unter Rühren (750 UPM) wurde eine Stunde polymerisiert, wobei der Ethendruck durch Nachdosieren gehalten wurde.

Nach Ende der Reaktionszeit wurde das Polymerisationsgemisch in ein Gefäß abgelassen und sofort in 5 $dm^3$ Aceton eingetragen, 10 Minuten gerührt und anschließend das ausgefallene Produkt filtriert. Der Filterkuchen wurde je dreimal abwechselnd mit 10%iger Salzsäure und Aceton gewaschen, der Rückstand in Aceton aufgeschlämmt und erneut filtriert. Das so gereinigte Polymer wurde bei 80°C im Vakuum (0,2 bar) 15 Stunden getrocknet.

Es wurde ein farbloses Polymer erhalten. Die ergänzenden Reaktionsbedingungen und die charakteristischen Daten des Polymers sind in Tabelle 16 und 17 zusammengefaßt.

Tabelle 16

| Vergleichsbeispiel | Monomerlösung [Gew.-% Norb.] | Metallocen | Metallocenmenge [mg] | Ethendruck [bar] | Menge Wasserstoff [mmol] |
|---|---|---|---|---|---|
| 26 | 10 | Isopropylen-bis-(1-indenyl) zirkondichlorid | 0,11 | 16 | 1,6 |
| 27 | 20 | Isopropylen-bis-(1-indenyl) zirkondichlorid | 0,28 | 14 | 1,6 |
| 28 | 30 | Isopropylen-bis-(1-indenyl) zirkondichlorid | 0,24 | 14 | 1,6 |
| 29 | 50 | Isopropylen(1-indenyl) cyclopentadienylzirkondi-chlorid | 0,45 | 12 | - |
| 30 | 50 | Isopropylen(1-indenyl) cyclopentadienylzirkondichlorid | 1,03 | 3 | - |

Tabelle 17

| Vergleichsbeispiel | Ausbeute [g] | Tg [°C] | VZ[ml/g] | Aktivität A* [g/(mmol h)] | $G_P$' [Pa] |
|---|---|---|---|---|---|
| 26 | 18,9 | 12,7 | 94,4 | 58.000 | 880.000 |
| 27 | 21,8 | 43,5 | 93,3 | 34.000 | 610.000 |
| 28 | 26,7 | 74 | 85,2 | 19.000 | 510.000 |
| 29 | 55,6 | 122 | 65 | 36.000 | 330.000 |
| 30 | 33.6 | 181 | 81 | 12.500 | 200.000 |

**Patentansprüche**

**1.** Cycloolefincopolymer enthaltend polymerisierte Einheiten, die sich zu 0,1 bis 99,9 Gew.-%, bezogen auf die Gesamtmenge der Monomeren, ableiten von mindestens einem polycyclischen Olefin der Formel IV, V, V, VI, VII, VIII oder IX

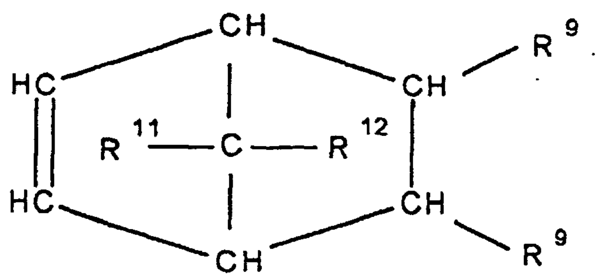

(IV)

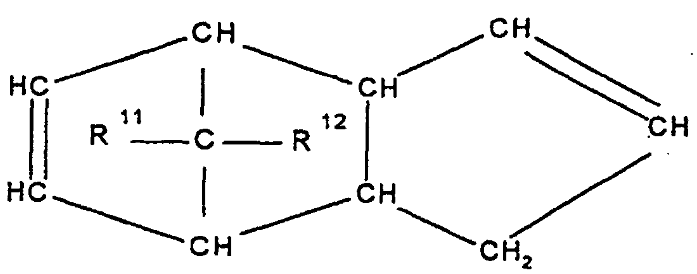

(V)

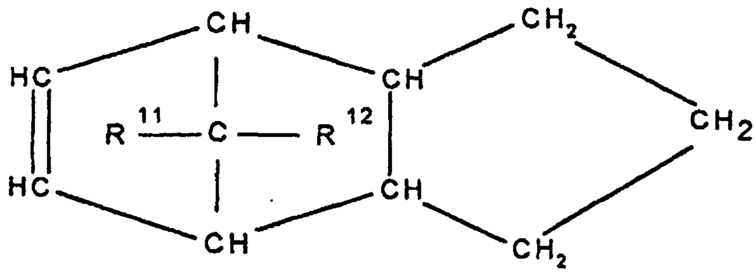

(V')

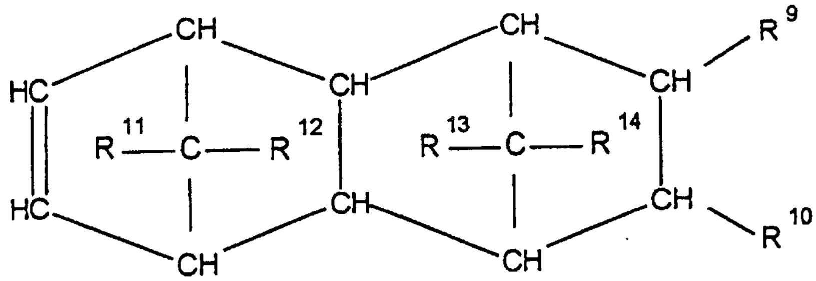

(VI)

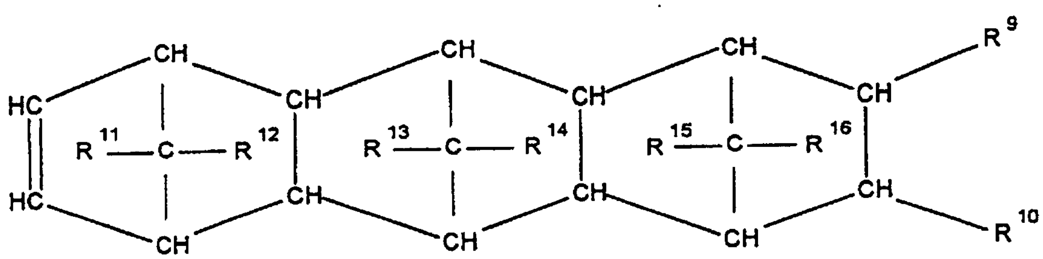

(VII)

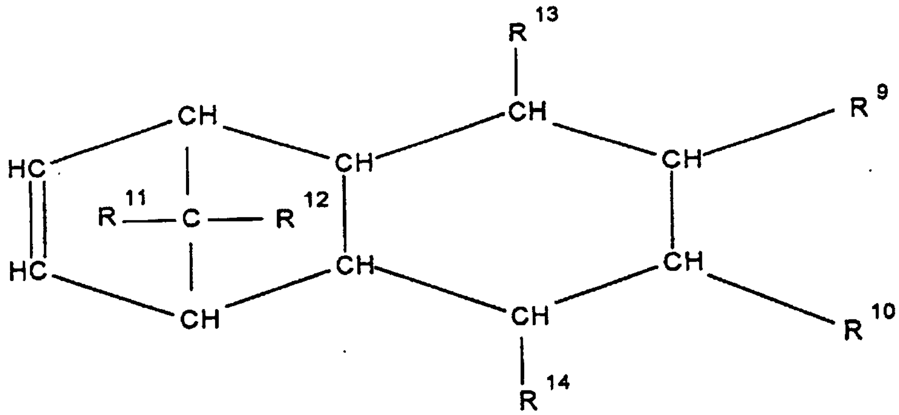

(VIII)

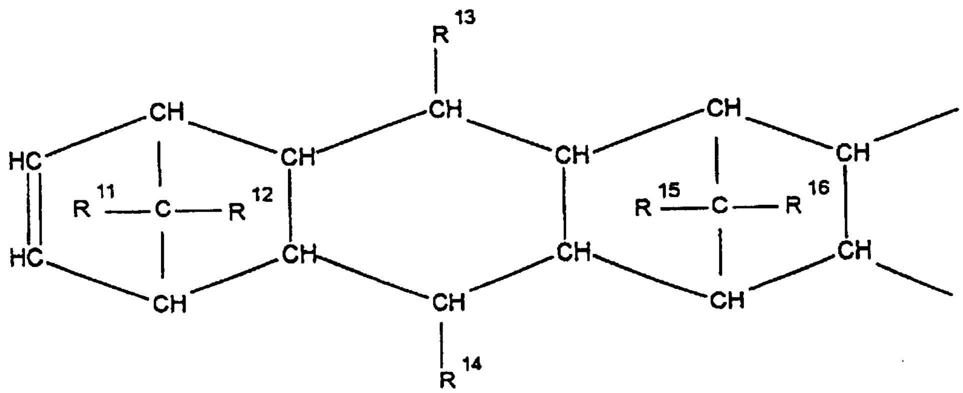

(IX)

worin $R^9$, $R^{10}$, $R^{11}$, $R^{12}$, $R^{13}$, $R^{14}$, $R^{15}$ und $R^{16}$ gleich oder verschieden sind und ein Wasserstoffatom oder einen Kohlenwasserstoffrest bedeuten, wobei gleiche Rest in den verschiedenen Formeln eine unterschiedliche Bedeutung haben können, zu 0 bis 99,9 Gew.-%, bezogen auf die Gesamtmenge der Monomeren von mindestens einem monocyclischen Olefin der Formel X

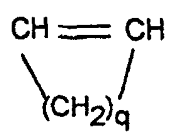

(X)

worin q eine Zahl von 2 bis 10 ist, und zu 0,1 bis 99,9 Gew.-%, bezogen auf die Gesamtmenge der Monomeren, von mindestens einem acyclischen 1-Olefin der Formel XI

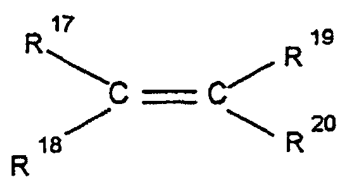

(XI)

worin $R^{17}$, $R^{18}$, $R^{19}$ und $R^{20}$ gleich oder verschieden sind und ein Wasserstoffatom oder einen Kohlenwasserstoffrest, bevorzugt einen $C_6$-$C_{10}$-Arylrest oder einen $C_1$-$C_8$-Alkylrest bedeuten, wobei die Polymerisation zum Cycloolefincopolymer unter Erhalt der Cyclen verläuft und wobei sich das Cycoolefincopolymer durch einen Plateaumodul $G'_p$ auszeichnet, der Werte gemäß

$$\log G'_p \geq - 0{,}0035 \cdot Tg + 6$$

aufweist, wobei der Plateaumodul durch schmelzrheologische Messungen in dynamischen Schwingungsexperimenten bestimmt wird.

**2.** Cycloolefincopolymer gemäß Anspruch 1, wobei der Plateaumodul $G'_p$ Werte gemäß

$$\log G'_p \geq -0{,}0035 \cdot Tg + 6{,}03$$

aufweist.

**3.** Cyclolefincopolymer gemäß Anspruch 1, wobei der Plateaumodul $G'_p$ Werte gemäß

$$\log G'_p \geq - 0{,}0035 \cdot Tg + 6{,}06$$

aufweist.

**4.** Cycloolefincopolymer enthaltend polymerisierte Einheiten die sich zu 0,1 bis 99,9 Gew.-%, bezogen auf die Gesamtmenge der Monomeren, ableiten von mindestens einem polycyclischen Olefin der Formel IV, V, V', VI, VII, VIII oder IX

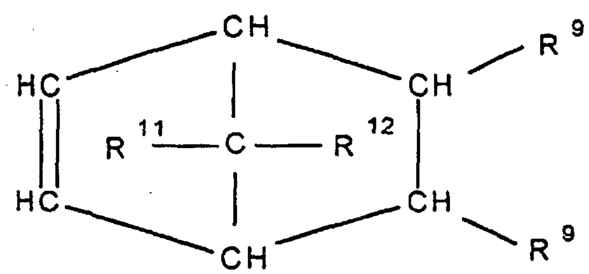

(IV)

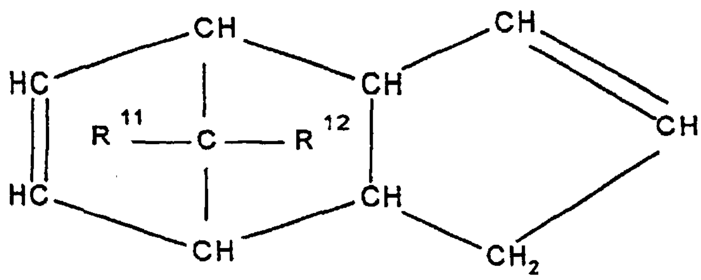

(V)

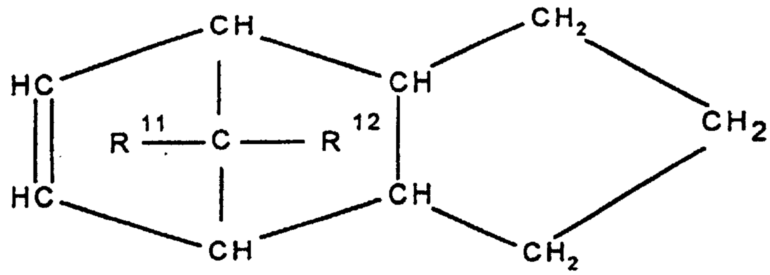

(V')

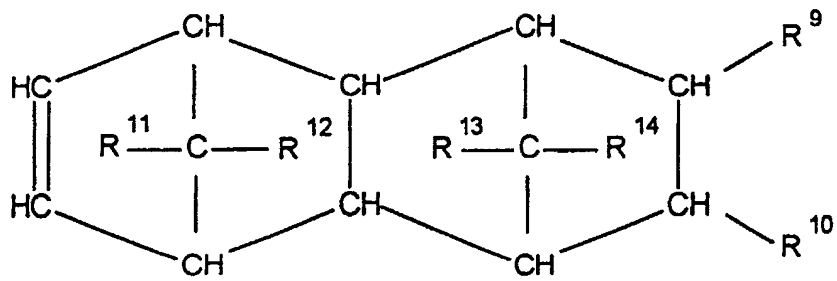

(VI)

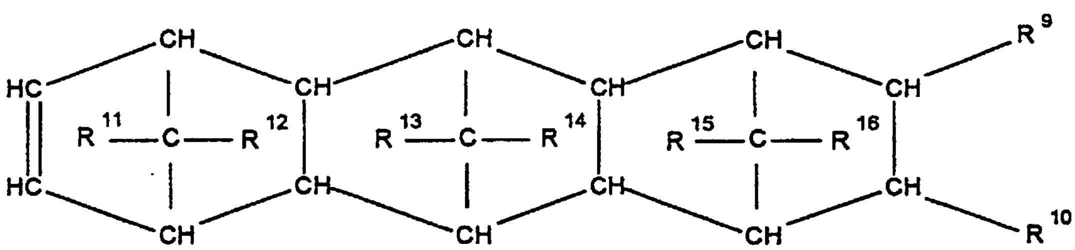

(VII)

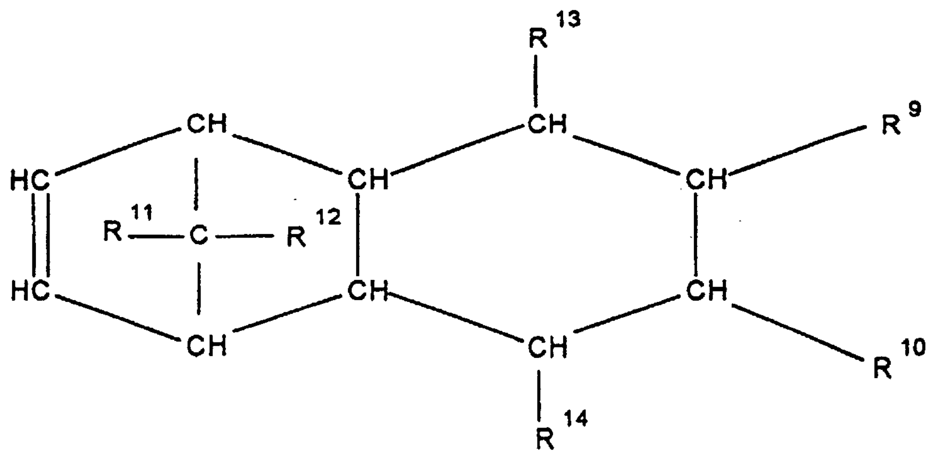

(VIII)

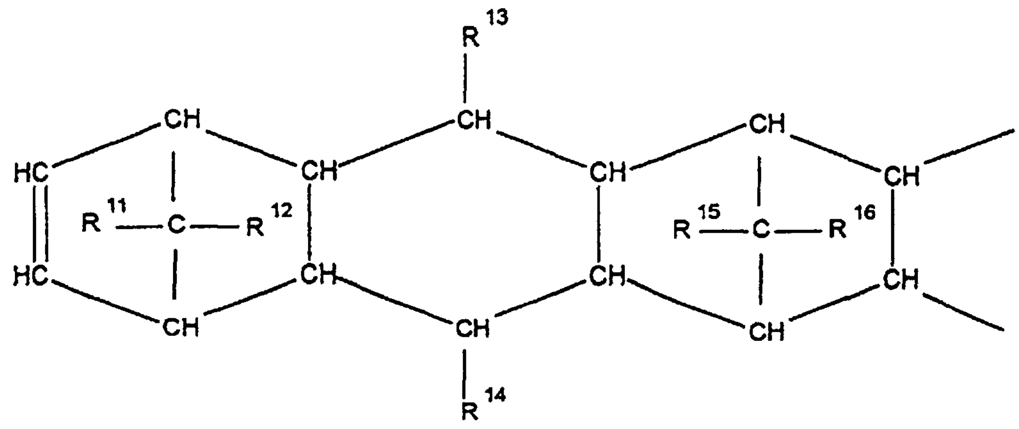

(IX)

worin $R^9$, $R^{10}$, $R^{11}$, $R^{12}$, $R^{13}$, $R^{14}$, $R^{15}$ und $R^{16}$ gleich oder verschieden sind und ein Wasserstoffatom oder einen Kohlenwasserstoffrest bedeuten, wobei gleiche Rest in den verschiedenen Formeln eine unterschiedliche Bedeutung haben können, zu 0 bis 99,9 Gew.-%, bezogen auf die Gesamtmenge der Monomeren von mindestens einem monocyclischen Olefin der Formel X

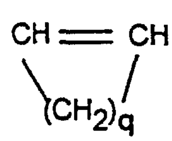

(X)

worin q eine Zahl von 2 bis 10 ist, und zu 0,1 bis 99,9 Gew.-%, bezogen auf die Gesamtmenge der Monomeren, von mindestens einem acyclischen 1-Olefin der Formel XI

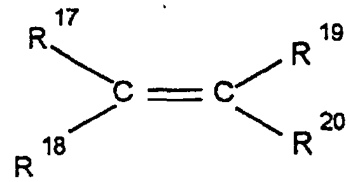

(XI)

worin $R^{17}$, $R^{18}$, $R^{19}$ und $R^{20}$ gleich oder verschieden sind und ein Wasserstoffatom oder einen Kohlenwasserstoffrest, bevorzugt einen $C_6$-$C_{10}$-Arylrest oder einen $C_1$-$C_8$-Alkylrest bedeuten, wobei die Polymerisation zum Cycloolefincopolymer unter Erhalt der Cyclen verläuft und wobei das Cycloolefincopolymer durch eine Reißdehnung gekennzeichnet ist, deren Werte R ≥ -0,0375 • Tg + 12 entsprechen.

5. Cycloolefincopolymer gemäß Anspruch 4, wobei die Reißdehnung R ≥ -0,0375 • Tg + 17 entspricht.

6. Cycloolefinpolymer gemäß Anspruch 4 oder 5, wobei dei Reißdehnung R ≥ -0,0375 • Tg + 22 entspricht.

7. Cycloolefincopolymer gemäß einem oder mehreren der Ansprüche 1 bis 6, wobei das polycyclische Olefin eine Verbindung der Formeln IV oder VI ist, worin $R^9$, $R^{10}$, $R^{11}$, $R^{12}$, $R^{13}$, $R^{14}$, $R^{15}$ und $R^{16}$ gleich oder verschieden sind und ein Wasserstoffatom oder einen Kohlenwasserstoffrest, insbesondere einen $C_6$-$C_{10}$-Arylrest oder einen $C_1$-$C_8$-Alkylrest bedeuten, worin gleiche Rest in den verschiedenen Formeln eine unterschiedliche Bedeutung haben können.

8. Cycloolefincopolymer gemäß einem oder mehreren der Ansprüche 1 bis 7, wobei das polycyclische Olefin Norbomen oder Tetracyclododecan ist.

9. Cycloolefincopolymer gemäß einem oder mehreren der Ansprüche 1 bis 8, wobei die acyclische 1-Olefin Ethylen ist.

10. Verwendung eines Cycloolefincopolymers nach einem oder mehreren der Ansprüche 1 bis 9 zur Herstellung von Formkörpern wie Extrusionsteilen wie Folien, Platten, Schläuche, Rohren, Stangen und Fasum oder Spritzgußteilen beliebiger Form.

11. Formkörper enthaltend mindestens ein Cycloolefincopolymer gemäß einem oder mehreren der Ansprüche 1 bis 9.

12. Polymerlegierung enthaltend mindestens ein Cycloolefincopolymer gemäß einem oder mehreren der Ansprüchen 1 bis 9.

## Claims

1. A cycloolefin copolymer comprising polymerized units of which from 0.1 to 99.9% by weight, based on the total amount of monomers, are derived from at least one polycyclic olefin of the formula IV, V, V', VI, VII, VIII or IX

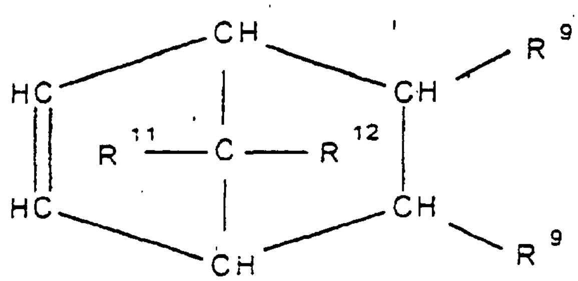

(IV)

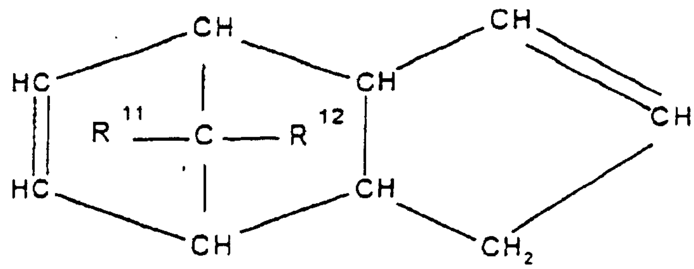

(V)

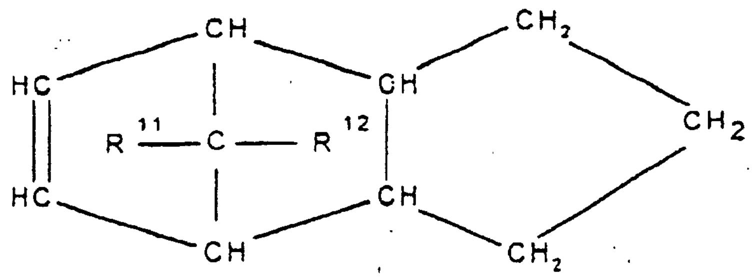

(V')

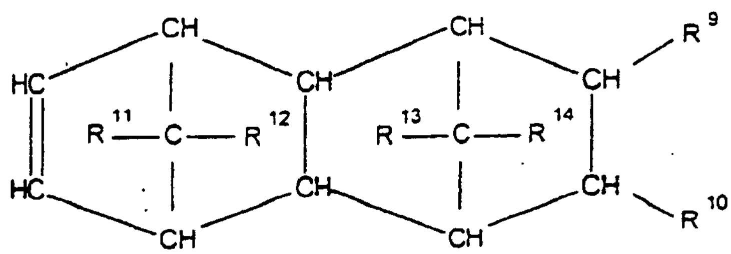

(VI)

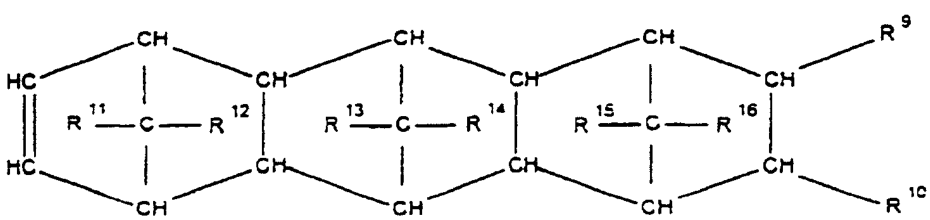

(VII)

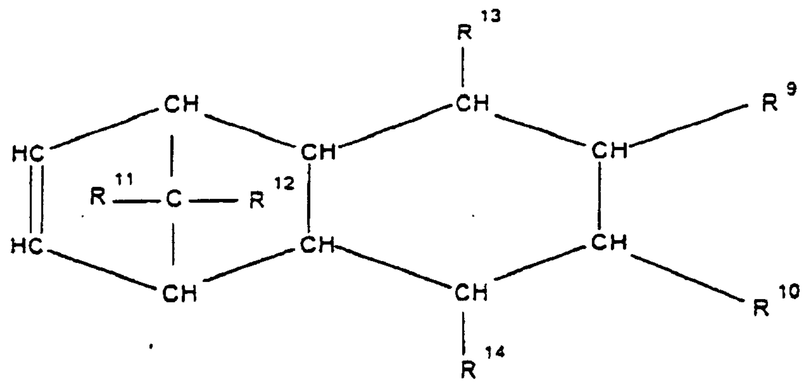

(VIII)

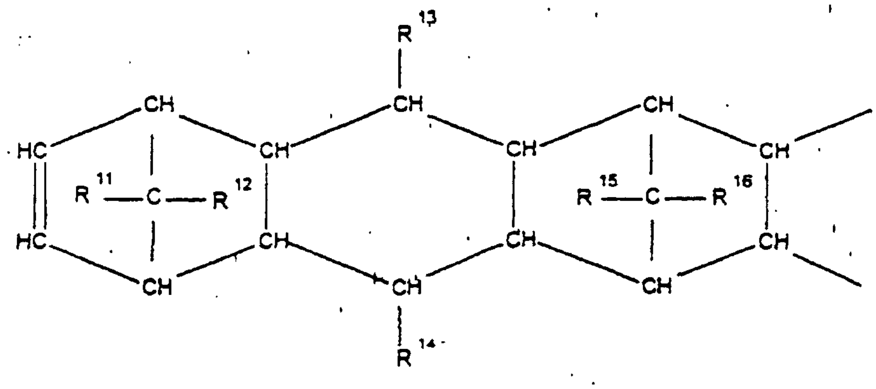

(IX)

where $R^9$, $R^{10}$, $R^{11}$, $R^{12}$, $R^{13}$, $R^{14}$, $R^{15}$ and $R^{16}$ are identical or different and are each a hydrogen atom or a hydrocarbon radical, where identically numbered radicals in the various formulae can have different meanings, from 0 to 99.9% by weight, based on the total amount of monomers, are derived from at least one monocyclic olefin of the formula X

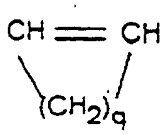

(X)

where q is from 2 to 10, and from 0.1 to 99.9% by weight, based on the total amount of monomers, are derived from at least one acyclic 1-olefin of the formula XI

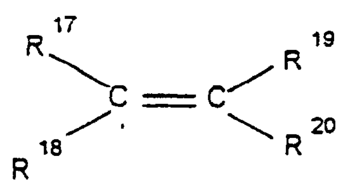

(XI)

where $R^{17}$, $R^{18}$, $R^{19}$ and $R^{20}$ are identical or different and are each a hydrogen atom or a hydrocarbon radical, preferably a $C_6$-$C_{10}$-aryl radical or a $C_1$-$C_8$-alkyl radical, wherein the polymerization to the cycloolefin copolymer proceeds with retention of the rings and the cycloolefin copolymer has a plateau modulus $G'_p$ whose values obey

the relationship

$$\log G'_p \geq -0.0035 \cdot T_g + 6,$$

where plateau modulus is determined by melt-rheological measurements in dynamic vibrational experiments.

**2.** A cycloolefin copolymer as claimed in claim 1 whose plateau modulus $G'_p$ has values which obey the relationship

$$\log G'_p \geq -0.0035 \cdot T_g + 6.03.$$

**3.** A cycloolefin copolymer as claimed in claim 1 whose plateau modulus $G'_p$ has values which obey the relationship

$$\log G'_p \geq -0.0035 \cdot T_g + 6.06.$$

**4.** A cycloolefin copolymer comprising polymerized units of which from 0.1 to 99.9% by weight, based on the total amount of monomers, are derived from at least one polycyclic olefin of the formula IV, V, V', VI, VII, VIII or IX

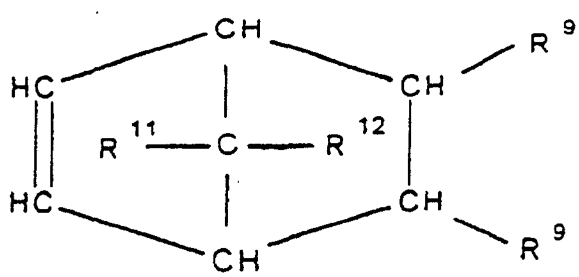

(IV)

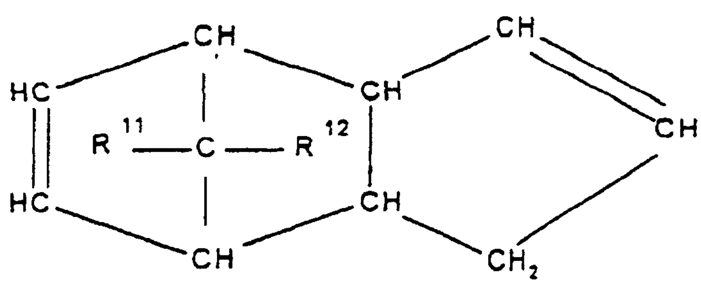

(V)

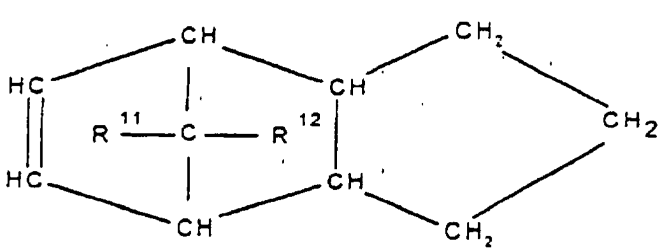

(V')

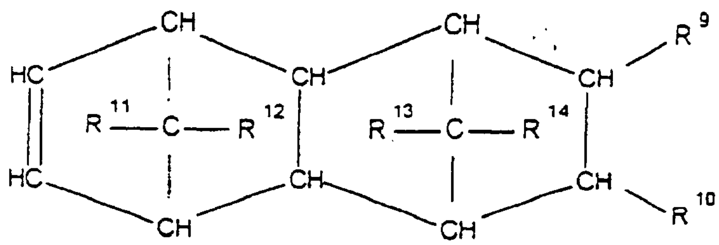

(VI)

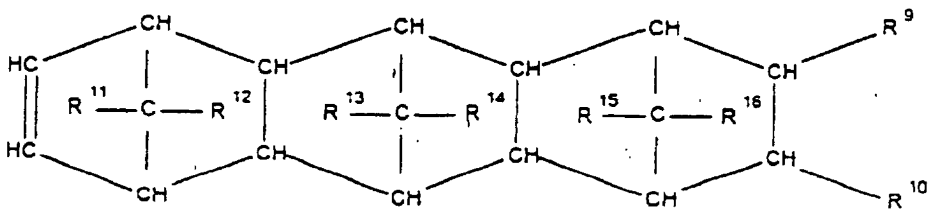

(VII)

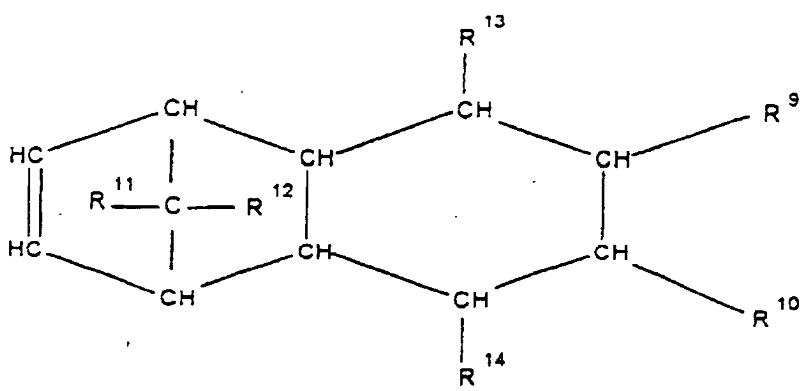

(VIII)

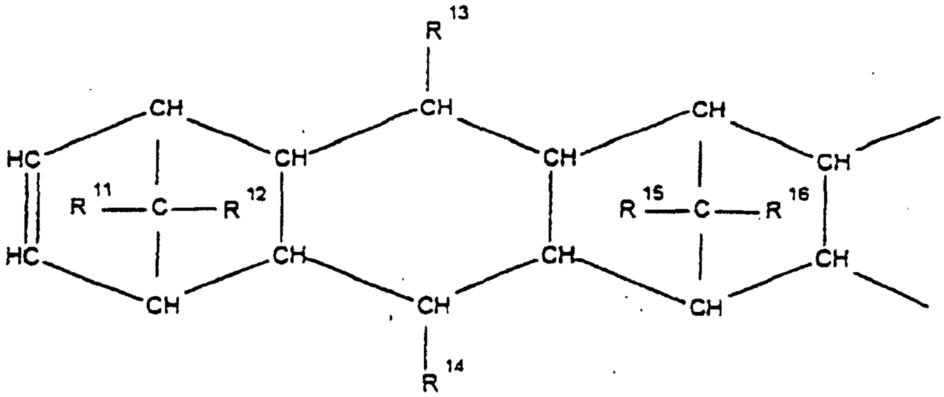

(IX)

where $R^9$, $R^{10}$, $R^{11}$, $R^{12}$, $R^{13}$, $R^{14}$, $R^{15}$ and $R^{16}$ are identical or different and are each a hydrogen atom or a hydrocarbon radical, where identically numbered radicals in the various formulae can have different meanings, from 0 to 99.9% by weight, based on the total amount of monomers, are derived from at least one monocyclic olefin of the formula X

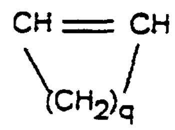

(X)

where q is from 2 to 10, and from 0.1 to 99.9% by weight, based on the total amount of monomers, are derived from at least one acyclic 1-olefin of the formula XI

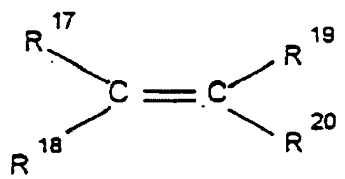

(XI)

where $R^{17}$, $R^{18}$, $R^{19}$ and $R^{20}$ are identical or different and are each a hydrogen atom or a hydrocarbon radical, preferably a $C_6$-$C_{10}$-aryl radical or a $C_1$-$C_8$-alkyl radical, wherein the polymerization to the cycloolefin copolymer proceeds with retention of the rings and the cycloolefin copolymer has an elongation at break whose values obey the relationship $R \geq -0.0375 \cdot T_g + 12$.

**5.** A cycloolefin copolymer as claimed in claim 4 whose elongation at break obeys the relationship $R \geq -0.037 \cdot Tg + 17$.

**6.** A cycloolefin copolymer as claimed in claim 4 or 5 whose elongation at break obeys the relationship $R \geq -0.0375 \cdot T_g + 22$.

**7.** A cycloolefin copolymer as claimed in one or more of claims 1 to 6, wherein the polycyclic olefin is a compound of the formula IV or VI in which $R^9$, $R^{10}$, $R^{11}$, $R^{12}$, $R^{13}$, $R^{14}$, $R^{15}$ and $R^{16}$ are identical or different and are each a hydrogen atom or a hydrocarbon radical, in particular a $C_6$-$C_{10}$-aryl radical or a $C_1$-$C_8$-alkyl radical, where identically numbered radicals in the various formulae can have different meanings.

**8.** A cycloolefin copolymer as claimed in one or more of claims 1 to 7, wherein the polycyclic olefin is norbornene or tetracyclododecane.

**9.** A cycloolefin copolymer as claimed in one or more of claims 1 to 8, wherein the acyclic 1-olefin is ethylene.

**10.** The use of a cycloolefin copolymer as claimed in one or more of claims 1 to 9 for producing moldings such as extruded parts such as films, sheets, hoses, pipes, rods and fibers or injection-molded parts of any shape.

**11.** A molding comprising at least one cycloolefin copolymer as claimed in one or more of claims 1 to 9.

**12.** A polymer blend comprising at least one cycloolefin copolymer as claimed in one or more of claims 1 to 9.

**Revendications**

**1.** Copolymère de cyclooléfine contenant des unités polymères qui sont dérivées, à raison de 0,1 à 99,9% en poids, par rapport à la quantité totale de monomères, d'au moins une oléfine polycyclique de formule IV, V, V', VI, VII, VIII ou IX

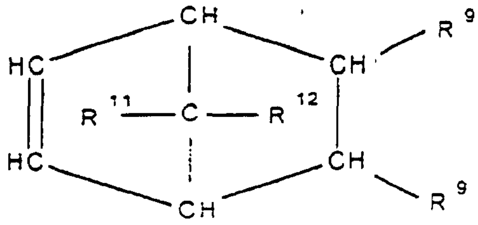

(IV)

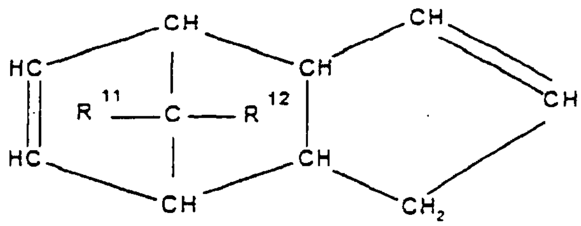

(V)

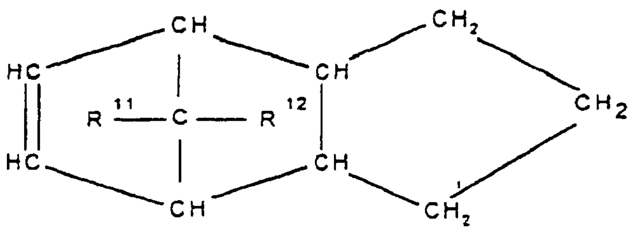

(V')

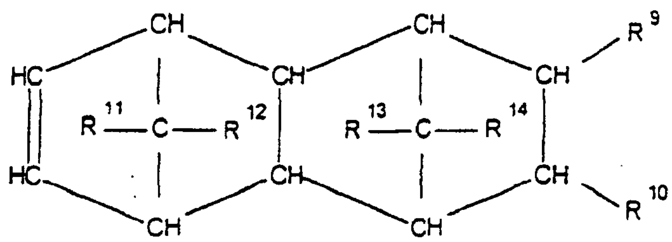

(VI)

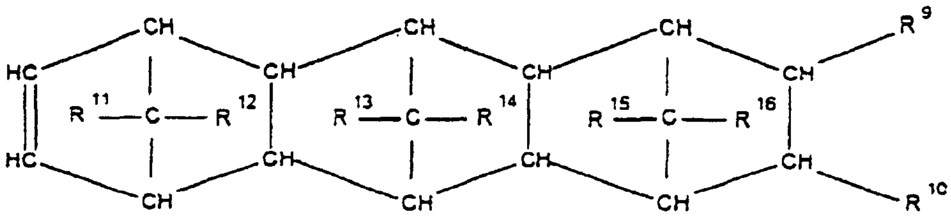

(VII)

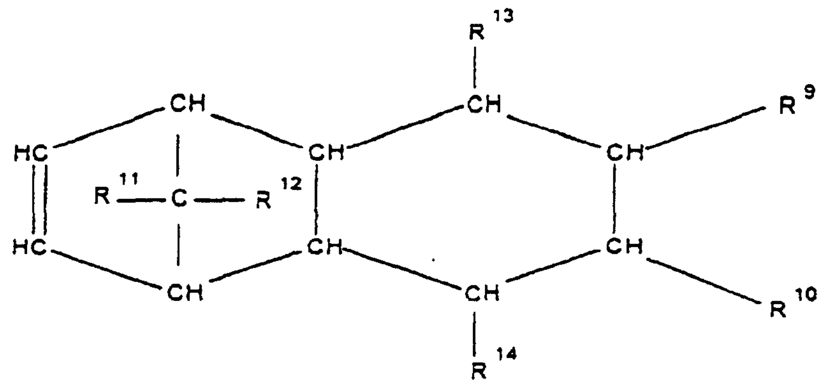

(VIII)

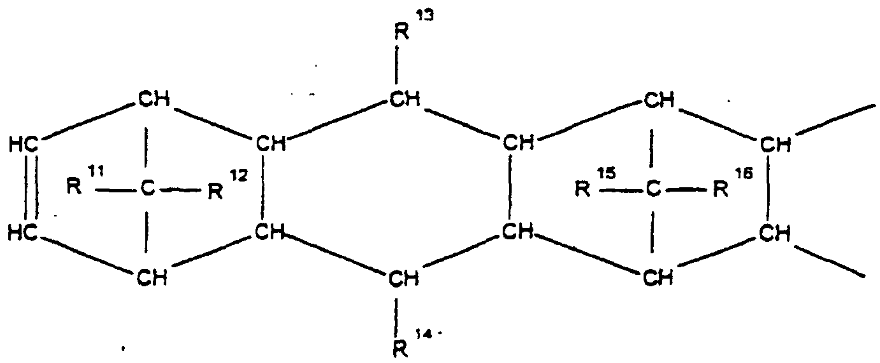

(IX)

dans lesquelles $R^9$, $R^{10}$, $R^{11}$, $R^{12}$, $R^{13}$, $R^{14}$, $R^{15}$ et $R^{16}$ sont identiques ou différents et signifient un atome d'hydrogène ou un radical hydrocarboné, les radicaux identiques pouvant avoir une signification différente dans les différentes formules, à raison de 0 à 99,9% en poids, par rapport à la quantité totale des monomères, d'au moins une oléfine monocyclique de formule X

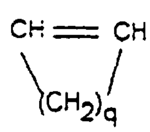

(X)

dans laquelle q représente un nombre de 2 à 10, et à raison de 0,1 à 99,9% en poids, par rapport à la quantité totale des monomères, d'au moins une 1-oléfine acyclique de formule XI

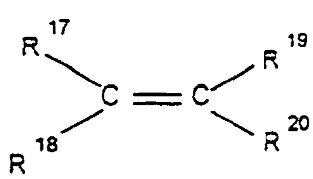

(XI)

dans laquelle $R^{17}$, $R^{18}$, $R^{19}$ et $R^{20}$ sont identiques ou différents et signifient un atome d'hydrogène ou un radical hydrocarboné, de préférence un radical aryle en $C_6$ à $C_{10}$ ou un radical alkyle en $C_1$ à $C_8$, la polymérisation en copolymère de cyclooléfine se déroulant en conservant les cycles et le copolymère de cyclooléfine se caractérisant par un module de plateau $G'_p$ qui présente des valeurs selon

$$\log G'_p \geq -0{,}0035 \cdot Tg + 6$$

le module de plateau étant déterminé par des mesures rhéologiques de masse fondue dans des expériences d'oscillation dynamique.

**2.** Copolymère de cyclooléfine selon la revendication 1, le module de plateau $G'_p$ présentant des valeurs selon

$$\log G'_p \geq -0{,}0035 \cdot Tg + 6{,}03.$$

**3.** Copolymère de cyclooléfine selon la revendication 1, le module de plateau $G'_p$ présentant des valeurs selon

$$\log G'_p \geq -0{,}0035 \cdot Tg + 6{,}06.$$

**4.** Copolymère de cyclooléfine contenant des unités polymères qui sont dérivées, à raison de 0,1 à 99,9% en poids, par rapport à la quantité totale de monomères, d'au moins une oléfine polycyclique de formule IV, V, V', VI, VII, VIII ou IX

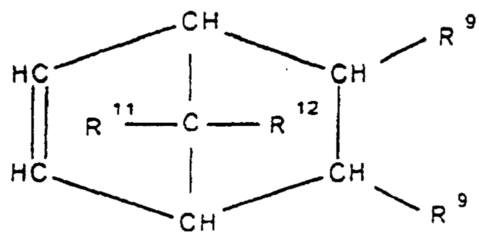

(IV)

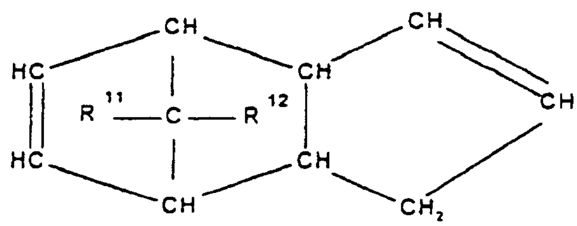

(V)

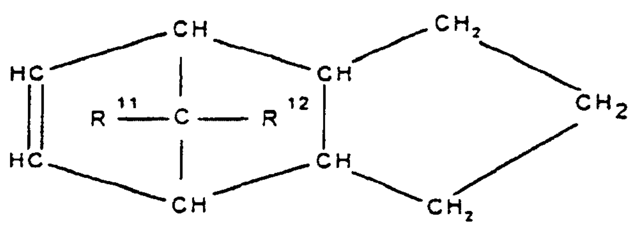

(V')

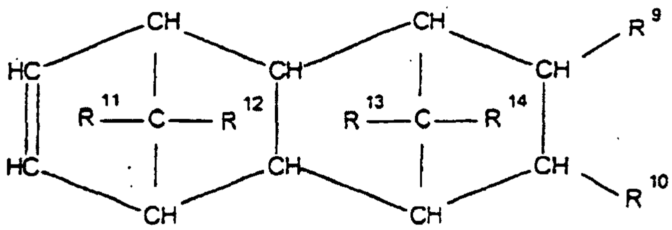

(VI)

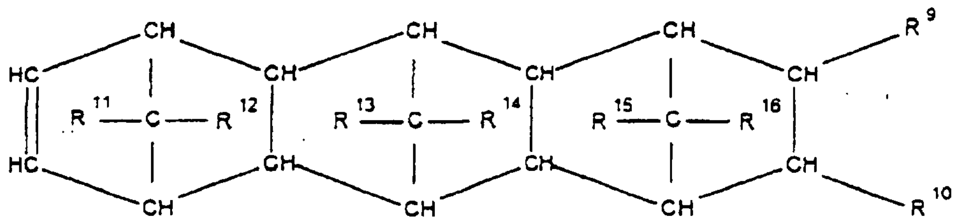

(VII)

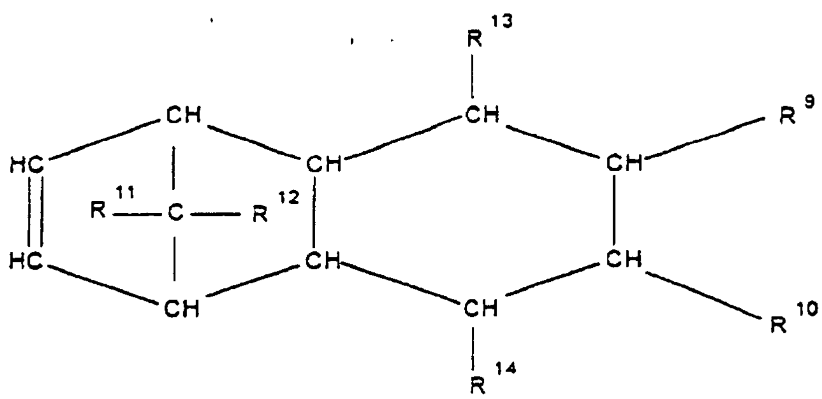

(VIII)

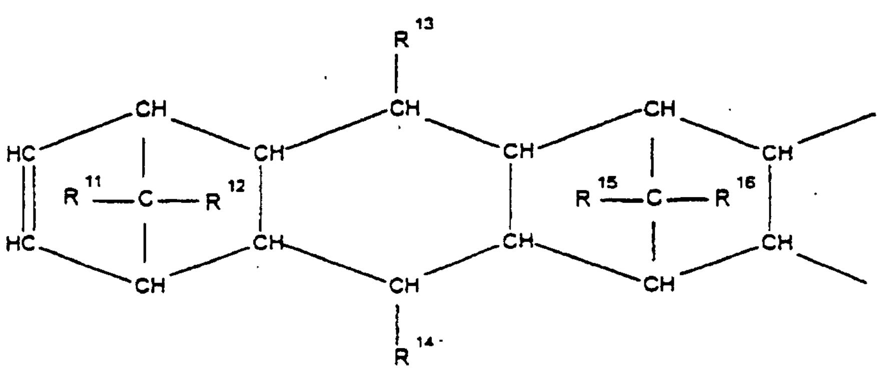

(IX)

dans lesquelles $R^9$, $R^{10}$, $R^{11}$, $R^{12}$, $R^{13}$, $R^{14}$, $R^{15}$ et $R^{16}$ sont identiques ou différents et signifient un atome d'hydrogène ou un radical hydrocarboné, les radicaux identiques pouvant avoir une signification différente dans les différentes formules, à raison de 0 à 99,9% en poids, par rapport à la quantité totale des monomères, d'au moins une oléfine monocyclique de formule X

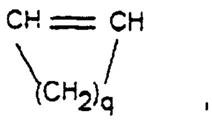

(X)

dans laquelle q représente un nombre de 2 à 10, et à raison de 0,1 à 99,9% en poids, par rapport à la quantité totale des monomères, d'au moins une 1-oléfine acyclique de formule XI

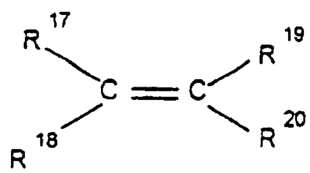

(XI)

dans laquelle $R^{17}$, $R^{18}$, $R^{19}$ et $R^{20}$ sont identiques ou différents et signifient un atome d'hydrogène ou un radical hydrocarboné, de préférence un radical aryle en $C_6$ à $C_{10}$ ou un radical alkyle en $C_1$ à $C_8$, la polymérisation en copolymère de cyclooléfine se déroulant en conservant les cycles et le copolymère de cyclooléfine se caractérisant par un allongement à la rupture dont les valeurs correspondent à des valeurs $R \geq -0{,}0375 \cdot Tg + 12$.

5. Copolymère de cyclooléfine selon la revendication 4, l'allongement à la rupture correspondant à $R \geq -0{,}0375 \cdot Tg + 17$.

6. Copolymère de cyclooléfine selon les revendications 4 ou 5, l'allongement à la rupture correspondant à $R \geq -0{,}0375 \cdot T_g + 22$.

7. Copolymère de cyclooléfine selon l'une ou plusieurs des revendications 1 à 6, l'oléfine polycyclique étant un composé des formules IV ou VI, $R^9$, $R^{10}$, $R^{11}$, $R^{12}$, $R^{13}$, $R^{14}$, $R^{15}$ et $R^{16}$ étant identiques ou différents et signifiant un atome d'hydrogène ou un radical hydrocarboné, en particulier un radical aryle en $C_6$ à $C_{10}$ ou un radical alkyle en $C_1$ à $C_8$, des radicaux identiques pouvant avoir une signification différente dans les différentes formules.

8. Copolymère de cyclooléfine selon l'une ou plusieurs des revendications 1 à 7, l'oléfine polycyclique étant du norbornène ou du tétracyclododécane.

9. Copolymère de cyclooléfine selon l'une ou plusieurs des revendications 1 à 8, la 1-oléfine acyclique étant de l'éthylène.

10. Utilisation d'un copolymère de cyclooléfine selon l'une ou plusieurs des revendications 1 à 9 pour la préparation de corps moulés tels que des pièces extrudées telles que des films, des plaques, des flexibles, des tuyaux, des barres et des fibres ou des pièces moulées par injection de forme quelconque.

11. Corps moulé contenant au moins un copolymère de cyclooléfine selon l'une ou plusieurs des revendications 1 à 9.

12. Mélange de polymères contenant au moins un copolymère de cyclooléfine selon l'une ou plusieurs des revendications 1 à 9.